(19) **Europäisches Patentamt / European Patent Office / Office européen des brevets**

(11) **EP 2 877 516 B1**

(12) **FASCICULE DE BREVET EUROPEEN**

(45) Date de publication et mention
de la délivrance du brevet:
**04.04.2018 Bulletin 2018/14**

(21) Numéro de dépôt: **13758912.3**

(22) Date de dépôt: **25.07.2013**

(51) Int Cl.:
*C08G 69/04* (2006.01)      *C08G 69/28* (2006.01)
*B29C 47/00* (2006.01)      *B29C 47/40* (2006.01)
*B29C 47/60* (2006.01)      *B29C 47/10* (2006.01)

(86) Numéro de dépôt international:
**PCT/FR2013/051793**

(87) Numéro de publication internationale:
**WO 2014/016521 (30.01.2014 Gazette 2014/05)**

(54) **PROCÉDÉ DE PRÉPARATION DE POLYAMIDE PAR EXTRUSION RÉACTIVE ET EXTRUDEUSE ADAPTÉE POUR LA MISE EN ŒUVRE D'UN TEL PROCÉDÉ**

VERFAHREN ZUR HERSTELLUNG EINES POLYAMIDS DURCH REAKTIVE EXTRUSION SOWIE EXTRUDER ZUR DURCHFÜHRUNG SOLCH EINES VERFAHRENS

METHOD FOR PREPARING A POLYAMIDE BY REACTIVE EXTRUSION, AND EXTRUDER ADAPTED FOR THE IMPLEMENTATION OF SUCH A METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.07.2012 FR 1257317**

(43) Date de publication de la demande:
**03.06.2015 Bulletin 2015/23**

(73) Titulaire: **Setup Performance**
**38290 Frontonas (FR)**

(72) Inventeurs:
• **LAGNEAUX, Didier**
 **F-74290 Bluffy (FR)**
• **GIMENEZ, Jérôme**
 **F-69500 Bron (FR)**
• **BROSSE, Anne-Carine**
 **F-38300 MAUBEC (FR)**
• **GOUJARD, Laurent**
 **F-69800 Saint-priest (FR)**

• **SAUTEL, Henri**
 **F-69008 Lyon (FR)**

(74) Mandataire: **Sarlin, Laure V.**
 **Cabinet Beau de Loménie**
 **51, avenue Jean-Jaurès**
 **BP 7073**
 **69301 Lyon Cedex 07 (FR)**

(56) Documents cités:
 **EP-A1- 0 410 650      WO-A1-96/33234**
 **WO-A1-2008/155271     GB-A- 1 289 349**

• **HA, S. K. ET AL: "CONTINUOUS POLYMERIZATION AND COPOLYMERIZATION OF LAURYL LACTAM IN A MODULAR COROTATING TWIN SCREW EXTRUDER", INTERNATIONAL POLYMER PROCESSING, MUNICH, DE, vol. 13, no. 2, 1 janvier 1998 (1998-01-01), pages 136-141, XP001079544, ISSN: 0930-777X**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 877 516 B1

**Description**

La présente invention concerne le domaine technique de la production de polyamide. En particulier, l'invention concerne un procédé de préparation par polycondensation d'un polymère polyamide par extrusion réactive et les extrudeuses adaptées pour la mise en oeuvre d'un tel procédé.

Les polyamides sont, le plus souvent, préparés par polycondensation d'une diamine et d'un diacide. De telles réactions de polycondensation sont classiquement réalisées dans un réacteur avec un procédé continu ou discontinu. Lors de la préparation de polyamides, la première étape consiste en la formation d'un sel à partir des monomères diacide et diamine. Ce sel, classiquement nommé sel de nylon, en solution aqueuse ou non, est introduit dans un réacteur et chauffé sous pression jusqu'à obtention d'un mélange de viscosité suffisante. L'eau introduite au départ et formée au cours de la réaction est éliminée par une mise sous pression réduite du réacteur. En sortie de réacteur, la viscosité du polymère est en général insuffisante et une étape supplémentaire est nécessaire pour obtenir des polyamides de grade extrusion notamment. Cette étape consiste en une étape de traitement thermique, également nommé recuit, qui correspond à une post-condensation en phase solide. Cette dernière étape peut se faire en réacteur à haute température sous pression réduite ou en présence d'un gaz inerte, ou encore en extrudeuse de façon continue.

De tels procédés nécessitent, non seulement des temps de réaction élevés (de l'ordre de une à plusieurs heures), mais également le transfert de la matière au cours des différentes étapes du procédé : synthèse du sel, polycondensation en réacteur et post condensation en phase solide.

Différentes variantes de tels procédés ou tentatives d'amélioration ont été proposées dans la littérature.

Tout d'abord, on peut citer des procédés utilisant l'extrusion qui permettent l'obtention de polyamides de hautes masses molaires en partant de pré-polymères. Les pré-polymères sont synthétisés selon un ou plusieurs procédés conventionnels en réacteur, puis une post-condensation est réalisée dans une extrudeuse sous pression réduite. Les polyamides décrits dans ce cas sont généralement des polyamides semi-aromatiques ou aromatiques dont la préparation est moins aisée que les polyamides aliphatiques. L'évolution des masses molaires est typiquement mesurée par une augmentation de la viscosité en solution des polyamides (viscosités réduite, relative ou inhérente), Pour illustrer de tels procédés, on peut citer les documents brevet suivants :

- La demande de brevet EP 0410649 décrit un procédé de préparation de polyamide semi-aromatique dans lequel un pré-polymère de polyamide semi aromatique terminé acide carboxylique de masse 5000 g/mol (viscosité inhérente de 0,25-0,35 dl/g) est introduit dans une extrudeuse avec une solution aqueuse de diamine en quantité stoechiométrique. En présence d'un gaz inerte, sous pression réduite, le traitement en extrudeuse permet d'augmenter la masse molaire du produit jusqu'à une viscosité inhérente de 0,3-1,2 dl/g.
- La demande de brevet JP 7228693 décrit la préparation d'un polyamide semi aromatique avec des unités téréphtaliques, en trois étapes. Lors d'une première étape, un oligomère est formé en réacteur, puis il est post-condensé en phase solide dans une seconde étape, A la fin de cette étape, sa viscosité inhérente est supérieure à 0,3 dL/g. Ce pré-polymère est ensuite post-condensé en extrudeuse à une température supérieure au point de fusion du polyamide, pour obtenir un polyamide de viscosité inhérente supérieure à 0,8 dl/g.
- Dans la demande de brevet JP 4337323, une résine polyamide de viscosité relative de 1,5 à 2,5 formée à partir d'hexaméthylène adipamide, hexaméthylène téréphthalamide et hexaméthylène isophtalamide en réacteur est dans une deuxième étape post-condensée en extrudeuse avec un catalyseur acide comme l'acide phosphorique ou l'acide pyrophosphorique.
- Dans le brevet US 4,760,129, un polyamide 6-6 de haute viscosité (viscosité relative entre 4 et 6) est préparé en extrudeuse à partir d'un pré-polymère de viscosité relative de 2,5 à 2,7. La matière traverse successivement une série de zones de mise sous pression par introduction d'un flux de vapeur d'eau et de zones de dépression par application d'une pression réduite. Les zones de dépression correspondent à une pression de plus en plus faible de 500 à 50 mBar.
- Dans le brevet DE 4329676, la polycondensation d'un copolyamide aromatique à partir de hexaméthylènediamine, d'acide isophtalique et d'acide téréphtalique, de viscosité relative en solution de 1,1, est achevée dans une extrudeuse comportant plusieurs zones de dégazage sous une pression réduite de 10-25 mbar. Le polyamide obtenu a un indice de viscosité relative en solution de 1,46.
- Dans la demande de brevet WO 93/14145, un polyamide aromatique, le polydodécane téréphtalamide ou des copolymères dérivés sont préparés en deux étapes : une première étape en réacteur qui conduit à la formation d'un pré-polymère de viscosité réduite de 0,1 à 0,4 dl/g, puis une deuxième étape en extrudeuse mono-vis permettant d'augmenter la viscosité réduite à au moins 0,5 dL/g.
- Dans le brevet US 3,040,005 un polyamide (PA 6-6) de haute masse molaire (39000 g/mol) est obtenu à partir d'un pré-polymère de 17000 g/mol (viscosité inhérente de 1,05-1,2 dl/g) avec un passage dans une extrudeuse sous pression réduite en présence d'un gaz inerte.
- Dans la demande de brevet WO 99/61509, un polyamide téréphtalique (PA 6-T) contenant au moins 55 % d'unités téréphtaliques est synthétisé en extrudeuse sous pression réduite, à partir d'un oligomère PA6T de viscosité inhérente inférieure à 0,3 dL/g et d'un oligomère PA6T contenant jusqu'à 50 % d'unités téréphtaliques de viscosité inhérente d'au moins 0,9 dl/g. Le polyamide final contient ainsi au moins 55 % d'unités téréphtaliques.

Ces différents procédés reposent tous sur l'optimisation de l'étape de post-condensation. Tous nécessitent l'introduction dans l'extrudeuse utilisée d'un pré-polymère de viscosité suffisante qu'il est nécessaire de préalablement préparer en réacteur. Ces procédés sont donc longs et nécessitent des transferts et manipulations qui ne sont pas aisés à mettre en oeuvre à l'échelle industrielle, notamment.

D'autres procédés envisagent d'introduire un sel de nylon dans une extrudeuse. Ces procédés conduisent à l'obtention de polyamides ayant des indices de viscosité réduite de 20-60 ml/g, ce qui est assez faible. Il est donc nécessaire de préparer le sel de nylon dans une étape préalable et c'est ce sel qui est introduit dans l'extrudeuse. On peut citer, tout d'abord, la demande de brevet EP 0410650, dans laquelle, après introduction du sel de nylon en présence de catalyseur dans une extrudeuse bi-vis de 21D, un pré-polymère d'indice de viscosité inhérente de 35 ml/g correspondant à une masse molaire de 3000 à 5000 g/mol est obtenu par l'application de conditions de température et de pression. L'originalité de ce procédé repose sur l'utilisation d'un sel de nylon anhydre, et non d'un sel en phase aqueuse habituellement utilisé dans les réacteurs discontinus. L'utilisation d'un catalyseur est requise dans le procédé décrit pour accélérer le processus de polycondensation. Il convient également de noter que les monomères qui composent le sel de départ sont d'un côté des diacides aromatiques et de l'autre des diamines aliphatique, cycloaliphatique ou aromatique.

On peut également citer la demande de brevet WO 96/33234, dans laquelle un sel de Nylon (PA 6-6) est introduit dans une extrudeuse bi-vis contro-rotative de longueur 36 D, D étant le diamètre des vis qui est égal à 34 mm. Le produit obtenu est directement introduit dans une seconde extrudeuse co-rotative de 40D (D étant le diamètre des vis qui est égal à 40 mm) avec des zones de pression différentes induites par des dispositifs de mise sous pression réduite, afin d'obtenir un produit ayant un indice de viscosité réduite de 49 à 62 ml/g. Le produit obtenu en sortie d'extrudeuse est ensuite post-condensé en phase solide pendant 8 heures à 170°C pour obtenir un polyamide d'indice de viscosité réduite de 139 à 190 ml/g. Dans les différents exemples de cette demande de brevet un sel anhydre, produit au préalable en phase aqueuse, est introduit dans la première extrudeuse contre-rotative. De plus, les essais comparatifs démontrent la nécessité d'utiliser une première extrudeuse contro-rotative pour obtenir des polyamides présentant un indice de viscosité supérieur à 40 ml/g. Les essais 3a à 3g, notamment, réalisés avec des montages d'extrusion réactive sur 70D, en reliant deux extrudeuses co-rotatives de respectivement 30 et 40D pour rallonger le temps de séjour, conduisent à des polyamides présentant un indice de viscosité inférieur à 20 ml/g, ce qui démontre la nécessité d'utiliser une extrudeuse contro-rotative dans les premiers temps de réaction.

WO,A,2008 155271 décrit un procédé pour la préparation d'un polyamide, mais ne divulgue pas deux opérations d'évacuation ou commnent les monmères sont introduits dans l'extrudeuse sans préparation du sel correspondant. D'autres documents comme le document GB 1 289 349 et la publication de S. K. HA et al., Continuous Polymerization and Copolymerization of Lauryl Lactam in a Modular Corotating Twin Screw Extruder, Hanser Publishers, Munich, Intern. Polymer Processing XIII (1998) décrivent des procédés de polymérisation de lauryl lactame ou de copolymérisation de lauryl lactame et de caprolactame dans une extrudeuse bi-vis co-rotative. Les réactions de polymérisation mises en oeuvre dans ces documents sont des réactions de polymérisation par ouverture de cycle et sont très différentes des réactions de polymérisation par polycondensation.

En effet, les réactions de polycondensation sont des réactions de polymérisation par étapes, dans lesquelles les monomères avec deux ou plusieurs groupes fonctionnels réagissent pour former d'abord des dimères, ensuite des trimères ou des quadrimères, puis des oligomères plus ou moins longs, pour ensuite arriver à des polymères à longue chaîne.

Dans la polymérisation par polycondensation, chaque étape est une réaction de condensation qui se fait avec élimination de petites molécules, nommées sous-produit de réaction, telles que $H_2O$, HCl, ..., en fonction des monomères mis en jeu. Dans le cas de la polycondensation de diamine et diacide carboxylique ou encore d'un monomère unique comportant à la fois une fonction acide-carboxylique et une fonction amine, une telle réaction se fait par élimination d'eau, en tant que sous-produit de la réaction de polycondensation.

Ce type de réaction est à distinguer des réactions de polymérisation par ouverture de cycle, comme c'est le cas des polymérisations de caprolactames décrites dans le document GB 1 289 349 et la publication de S. K. HA *et al.,* supra qui correspondent à des polymérisations en chaîne où des macromolécules ayant terminé leur croissance sont formées dès le début de la polymérisation. Les polymérisations en chaîne exigent la présence d'un amorceur à partir duquel est produite une espèce qui possède un centre actif

capable d'amorcer la réaction. La polymérisation se poursuit ensuite par la propagation du centre actif et par l'addition successive d'un grand nombre de molécules de monomères en un temps très court. Dès le début de la réaction, en un temps très court, on a donc de longues chaînes polymères qui se forment. La croissance des chaînes est interrompue dès que le centre actif est détruit par une des nombreuses réactions de terminaisons possibles.

Un des objectifs de la présente invention est de proposer un procédé de préparation de polyamides par polycondensation qui soit plus simple et plus rapide que les solutions proposées par l'art antérieur.

Dans ce contexte, la présente invention selon la revendication 1 a pour objet un procédé de préparation d'un polyamide à partir d'un ou plusieurs monomères adaptés à la préparation de polyamide caractérisé en ce que le ou les monomères, sont introduits dans une extrudeuse comportant au moins deux vis d'acheminement tournant de manière co-rotative et en ce que toutes les étapes de réaction et de polycondensation, en partant initialement du ou des monomères sélectionnés, et permettant d'aboutir au polyamide désiré, sont menées dans une extrudeuse comportant au moins deux vis d'acheminement tournant de manière co-rotative. La polycondensation est réalisée en réalisant au moins deux opérations d'évacuation du ou des sous-produit(s) formé(s) par la réaction de polycondensation. Lorsque la polycondensation est réalisée avec des monomères diamine et diacide carboxylique ou encore avec un monomère unique comportant à la fois une fonction acide-carboxylique et une fonction amine, le sous-produit formé est de l'eau.

Dans le cadre de l'invention, les monomères, sont introduits, sans réaction préalable et sans préparation préalable du sel correspondant.

Le procédé selon l'invention pourra remplacer avantageusement les procédés traditionnels de production des polyamides en économisant de l'énergie, en réduisant la taille des usines et le niveau des investissements, en augmentant la productivité, mais surtout en réduisant les risques industriels car la réaction se fait en couche mince et confinée et non plus dans des volumes de plusieurs mètres cube sous des pressions de plusieurs bars.

dans des volumes de plusieurs mètres cube sous des pressions de plusieurs bars.

Dans une extrudeuse, le milieu réactionnel est confiné dans une enveloppe métallique de confinement. Le rapport de la section du milieu réactionnel instable et de l'enveloppe métallique de confinement est en général d'au plus 0,5% grand maximum, de sorte que l'enveloppe est au minimum 200 fois plus résistante à la pression générée par la réaction que celle des procédés traditionnels de polycondensation des polyamides. La réaction ne peut pas s'emballer car la masse inertielle de température de l'enveloppe est 1600 fois plus importante que la masse réactionnelle.

Ce procédé permet également de tester la synthèse de nouveaux polymères et ensuite de passer très facilement et rapidement de l'échelle pilote à la production.

L'invention concerne également les extrudeuses adaptées à la mise en oeuvre d'un tel procédé.

De manière préférée, le degré moyen de polymérisation ($DP_n$) du polyamide obtenu selon le procédé de l'invention est au moins égal à 50, de préférence au moins égal à 60, préférentiellement au moins égal à 70, et encore préférentiellement au moins égal à 100. Par degré moyen de polymérisation, on entend le nombre moyen d'unités structurales présentes dans une chaîne de polymère. Le degré moyen de polymérisation est typiquement évalué à partir de la masse molaire moyenne en nombre ($M_n$) du polyamide selon la formule suivante :

$$DP_n = \frac{M_n}{M_0}$$

avec,

$M_0$ la moyenne des masses molaires des monomères,
$M_n$ la masse molaire moyenne en nombre du polyamide.

Les masses molaires des polyamides sont classiquement déterminées par chromatographie d'exclusion stérique, par exemple en utilisant comme solvant d'élution le 1,1,1,3,3,3-hexafluoro-2-propanol. A titre d'exemple, les polyamides sont dissous dans ce même solvant à une concentration de $1 mg.mL^{-1}$ et le débit d'élution est de 0,75 $mL.min^{-1}$. Le polymère utilisé pour la calibration entre la masse molaire et le temps d'élution est, par exemple, le polyméthacrylate de méthyle.

Cette méthode permet de déterminer les masses molaires moyennes en nombre Mn et en masse Mw et l'indice de polydispersité d'un polymère donné.

De façon avantageuse, le polyamide obtenu selon le procédé de l'invention présente une masse molaire moyenne en masse (Mw) au moins égale à 14000 g/mol, de préférence au moins égale à 20000 g/mol, et préférentiellement appartenant à la gamme allant de 30000 à 100000 g/mol et/ou un indice de viscosité au moins égal à 80 ml/g, de préférence au moins égale à 100 ml/g, et préférentiellement appartenant à la gamme allant de 120 à 250 ml/g.

L'indice de viscosité (« viscosity number : VN ») peut être déterminé en suivant les Directives de la norme ISO 307 :2007. Un tel indice de viscosité est, de préférence, mesuré à 25°C, par exemple en utilisant les conditions suivantes : Le solvant utilisé pour former les solutions du polyamide dont la viscosité est à mesurer est un mélange de phénol et de dicholorobenzène avec une répartition massique de 50% chacun. Le polyamide est dissous à 135°C pendant 45 minutes pour une concentration finale de $5 mg.mL^{-1}$. Après refroidissement à température ambiante, les temps d'écoulement des solutions de polymères et du mélange solvant seul sont mesurés à 25°C dans un bain thermostaté à l'aide d'un viscosimètre de type Ubbeldohde comportant un capillaire avec un diamètre interne de 1,03 mm +/- 2% (norme ISO3105).

Il est admis par la norme ISO 307:2007 que le ratio des temps d'écoulement entre le solvant et une solution de polymère dans ce même solvant est égal au ratio de viscosité entre le solvant ($\eta_0$) et la solution de polymère ($\eta$). Par conséquent, l'indice de viscosité (VN) peut être calculé à partir de ce ratio selon la formule :

$$VN = (\frac{\eta}{\eta_0} - 1) * \frac{1}{c}$$

dans laquelle

$\eta/\eta_0$ est la viscosité relative de la solution de polymère dans le solvant utilisé,
**c** est sa concentration en mg/mL.

La description qui va suivre, en références aux Figures annexées, permet de mieux comprendre l'invention,

La **Figure 1** est une représentation schématique des différentes zones d'une extrudeuse utilisée dans le cadre de l'invention.
Les **Figures 2** et **3**, sont des représentations schématiques en perspective des vis d'acheminement, respectivement dans le cas d'une extrudeuse bi-vis co-rotative et d'une extrudeuse 12-vis co-rotative.
La **Figure 4** représente des exemples de différents éléments de transport pouvant être utilisés dans le cadre de l'invention sur les vis d'acheminement,
La **Figure 5** représente des exemples de différents éléments de cisaillement pouvant être utilisés dans le cadre de l'invention sur les vis d'acheminement,
La **Figure 6** représente des exemples de deux éléments de rétention pouvant être utilisés dans le cadre de l'invention sur les vis d'acheminement.
La **Figure 7** représente un exemple d'un élément de rétrécissement du passage pour la matière pouvant être utilisé dans le cadre de l'invention sur les vis d'acheminement.
La **Figure 8** est une représentation schématique des différentes zones d'une des extrudeuses utilisée dans les exemples.

Les monomères adaptés pour la formation de polyamide par polycondensation peuvent être :

Soit un monomère unique comportant à la fois une fonction acide carboxylique et une fonction amine, du type amino-acide ;

Soit au moins deux monomères, l'un portant deux fonctions amine et l'autre deux fonctions acide carboxylique ou un monomère équivalent du type dichlorure d'acide ou anhydride d'acide. Le plus souvent, un couple de monomères diamine/diacide, diamine/dichlorure d'acide ou diamine/anhydride d'acide sera utilisé, bien qu'il ne soit pas exclu d'utiliser un mélange de monomères diamine et un mélange de monomères du type diacide et/ou en plus un monomère du type amino-acide,
**[0029]** Par monomère amino-acide, on entend une molécule au moins en partie hydrocarbonée avec une fonction amine et une fonction acide carboxylique comprenant, en général, de 2 à 40 atomes de carbone.
Par monomère diamine, on entend une molécule au moins en partie hydrocarbonée avec deux fonctions amines comprenant, en général, de 2 à 40 atomes de carbone,
**[0031]** Par monomère diacide, on entend une molécule au moins en partie hydrocarbonée avec deux fonctions acides carboxyliques comprenant, en général, de 2 à 40 atomes de carbone.
Par monomère dichlorure d'acide, on entend une molécule au moins en partie hydrocarbonée avec deux fonctions chlorure d'acide comprenant, en général, de 2 à 40 atomes de carbone.
Par monomère anhydride d'acide, on entend une molécule au moins en partie hydrocarbonée avec une ou deux fonctions anhydride d'acide comprenant, en général, de 2 à 40 atomes de carbone.
On utilisera, de préférence, un couple de monomères diamine/diacide.
Dans le cadre de l'invention, on peut utiliser des monomères diamine, diacide, dichlorure d'acide, anhydride d'acide et/ou amino-acide aromatiques, semi-aromatiques ou aliphatiques. Les acides utilisés sont, par exemple, l'acide succinique, l'acide glutarique, l'acide adipique, l'acide pimélique, l'acide subérique, l'acide azélaïque, l'acide sébacique, l'acide undecanedioique, l'acide 1,12-dodécanedioique, l'acide dioléique, l'acide phtalique, l'acide téréphtalique, l'acide isophtalique, l'acide 5-sulfoisophtalique, les dimères acide gras ou des mélanges de tels acides dicarboxyliques. On pourra notamment utiliser, comme diamine, l'éthylènediamine, la propane-1,3-diamine, la tétraméthylène diamine, la pentane-1,5-diamine, l'hexaméthylène diamine, l'octaméthylène diamine, la décaméthylène diamine, la dodécaméthylène diamine, la m-xylylène diamine, le bis-(4-aminophényl)méthane, le bis-(4-aminophényl)propane-2,2, le bis-(4-aminocyclohexyl)méthane, la métaphénylènediamine, la paraphénylènediamine, la 2,2,4 ou 2,4,4-triméthylhexaméthylènediamine ou des mélanges de telles diamines. En particulier, le procédé selon l'invention est parfaitement adapté à la mise en oeuvre de monomères aliphatiques, qu'il s'agisse des diamines ou des diacides (ou dichlorures d'acide ou anhydrides d'acide) connus pour être moins réactifs que les monomères aromatiques.

Le ou les monomères introduits dans l'extrudeuse contiennent, de préférence, une teneur en eau inférieure à 5 % en masse, préférentiellement inférieure à 1 % en masse, plus spécifiquement inférieure à 0,6 % en masse. Une faible teneur en eau au départ dans le ou les monomères sélectionnés favorise l'avancement de la réaction car la quantité d'eau à éliminer au cours du procédé s'en trouve diminuée.

Le ou les monomères utilisés sont donc avantageusement conservés sous atmosphère inerte, par exemple sous atmosphère d'azote, argon ou hélium, avant leur introduction dans l'extrudeuse. Le gaz utilisé est préférentiellement de l'azote. L'utilisation d'un gaz inerte permet d'éviter l'oxydation des monomères, surtout s'ils sont introduits à chaud. De plus, ceci permet aussi de limiter l'introduction d'oxygène dans l'extrudeuse, afin de réduire les risques d'oxydation des monomères, oligomères, pré-polymère et polymère au cours du procédé. Une telle oxydation serait préjudiciable à l'avancement de la réaction, car elle déséquilibrerait le rapport stoechiométrique désiré et programmé dans le cadre du procédé.

Dans le cadre de l'invention, il est proposé un procédé de préparation de polyamides à partir d'un ou plusieurs monomères, et en particulier d'un couple de monomères diamine et diacide, dichlorure d'acide ou anhydride d'acide, exclusivement par extrusion réactive. Un tel procédé réalisé intégralement en extrudeuse permet de conduire à des polyamides correspondant à un grade dit d'extrusion ou d'injection. Dans le cadre du procédé selon l'invention, le polyamide désiré, correspondant en particulier à un degré moyen de polymérisation, à une masse molaire et/ou à un indice de viscosité précédemment mentionné(s), est obtenu directement en sortie d'extrudeuse, sans mise en oeuvre d'une étape ultérieure de condensation additionnelle réalisée hors extrudeuse. Aucun traitement thermique complémentaire tel qu'un recuit en phase solide n'est nécessaire pour obtenir le polyamide présentant les propriétés désirées.

De plus, aucune étape préalable de préparation d'un sel ou d'un prépolymère n'est nécessaire. Le ou les monomères sélectionnés sont introduits directement dans l'extrudeuse. L'extrudeuse comporte une première zone d'introduction du ou des monomères. Lorsque plusieurs monomères sont introduits, notamment sous la forme d'un couple de monomères diamine/diacide, diamine/dichlorure d'acide ou diamine/anhydride d'acide, ce qui est le plus fréquent, les différents monomères peuvent être incorporés au niveau d'une même entrée ou bien au niveau d'entrées distinctes. De manière avantageuse, qu'une ou plusieurs entrées soient prévues, l'extrudeuse est alimentée de manière indépendante, en chacun des monomères utilisés. Le débit d'alimentation en monomères est contrôlé de façon indépendante, il est ainsi possible de contrôler l'avancement de la réaction et le rapport acide/amine, en particulier au niveau des fonctions terminales, des polyamides finaux.

Le débit d'alimentation total (c'est-à-dire la somme des débits de monomères si plusieurs entrées sont présentes) en monomères variera typiquement de 2 à 480 kg/h, et sera ajusté en fonction de la longueur et du diamètre de l'extrudeuse utilisée. Dans la mesure où le ou les sous-produit(s) formé(s) par la réaction de polycondensation est(sont) éliminé(s) au cours du séjour dans l'extrudeuse et qu'une perte en monomères peut avoir lieu lors des opérations de dégazage et que les monomères de départ peuvent contenir de l'eau éliminée avec le ou les sous-produits, le débit d'alimentation est supérieur au débit de production. La quantité de sous-produit(s) dépend de sa nature ($H_2O$, HCl et acide organique) et de la masse molaire des monomères de départ. Dans la majorité des cas, le débit de production correspondra à 65%-98% du débit d'alimentation total en monomères.

Le ou les monomères sélectionnés, et en particulier la diamine et le diacide (ou le dichlorure d'acide ou anhydride d'acide), sont introduits dans l'extrudeuse à chaud ou à température ambiante. Ils peuvent être introduits sous forme solide, notamment sous la forme de granulés, paillettes, poudre ou sous tout autre forme solide, ou encore à l'état de fusion sous forme liquide. Dans ce cas, ils sont chauffés à une température supérieure à leur température de fusion, et, en particulier, supérieure de 5°C, et plus spécifiquement supérieure de 10 °C. Une introduction du ou des monomères sélectionnés dans l'extrudeuse sous une forme fusionnée liquide est préférée pour les raisons suivantes :

- Un meilleur contrôle de la stoechiométrie est possible, notamment en effectuant l'alimentation de l'extrudeuse en monomère(s), grâce à un dispositif d'alimentation tel qu'une pompe couplée à un débitmètre massique. Le dispositif d'alimentation utilisé permet, de préférence, un contrôle du débit avec un écart de 0,5% massique maximum, préférentiellement de 0,1% massique maximum. Ces conditions facilitent l'obtention de manière reproductible des polyamides pouvant atteindre une masse molaire moyenne en masse d'au moins 14000 g/mol, de préférence au moins égale à 20000 g/mol, et préférentiellement de 30000 à 100000 g/mol, avec un contrôle de la nature acide ou amine des fonctions terminales.

- La quantité d'oxygène présent dans la matière est réduite, ce qui facilite l'inertage du ou des monomères avant leur introduction dans l'extrudeuse.

- Lorsque le ou les monomères sont sous forme liquide, le mélange est plus rapide. Le procédé de préparation d'un polyamide selon l'invention comporte les étapes successives suivantes, toutes réalisées au sein de l'extrudeuse :

 - une étape de mélange du ou des monomères sélectionnés,
 - et une étape de polycondensation menée en réalisant successivement des opérations de cisaillement et de dépression sur la matière acheminée par les vis d'acheminement.

De manière préférée, on procède également à une étape de formation d'un bouchon ou joint de matière renouvelé de façon continue par acheminement de la matière sur les vis d'acheminement, entre les étapes de mélange et de polycondensation. De façon avantageuse, le bouchon ou joint constitué de la matière en avancement remplit tout le volume disponible pour le passage de la matière et constitue une zone qui est hermétique aux vapeurs, et notamment aux vapeurs de monomère qui peuvent être générées.

Aussi, plusieurs zones d'extrusion se succèdent, afin de produire selon un procédé continu, le polyamide souhaité : une zone d'introduction ($Z_0$) du ou des monomères, suivie d'une zone de mélange ($Z_1$) du ou des monomères, suivie, de préférence, d'une zone d'isolement ($Z_2$) permettant la formation d'un bouchon de matière renouvelée de façon continue par acheminement de cette dernière, suivie d'une zone de polycondensation ($Z_3$). Le bouchon formé par la matière rend le passage pour la matière hermétique aux vapeurs de monomères qui sont volatils dans les conditions d'extrusion utilisées dans la zone suivante de polycondensation, voire même dans les conditions de température utilisée dans la zone de mélange, et permet, ainsi, de conserver la stoechiométrie dans la zone de polycondensation, malgré le fait que la température de l'extrudeuse dépasse les températures d'évaporation desdits monomères. Ainsi, la zone d'isolement ($Z_2$) permet d'éviter le passage de vapeurs de monomères qui pourraient intervenir de la zone de mélange ($Z_1$) vers la zone de polycondensation ($Z_3$) ou de la zone de polycondensation ($Z_3$) vers la zone de mélange ($Z_1$).

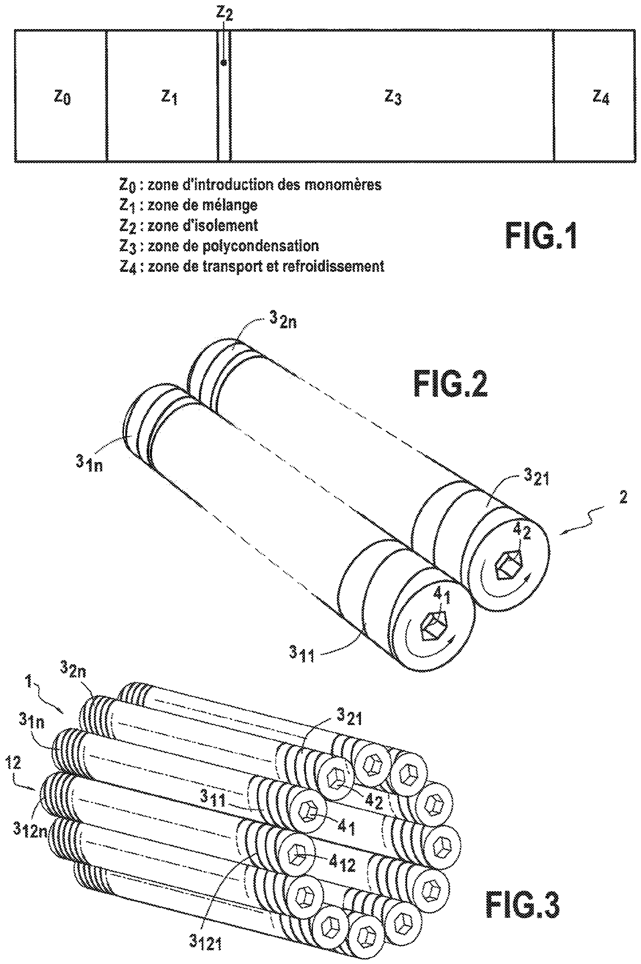

Ces zones se succèdent dans le sens d'acheminement de la matière au cours de l'extrusion. En fonction de la zone concernée, la matière en avancement sera constituée de monomère(s), oligomère, prépolymère, polymère avec un degré de polycondensation plus ou moins élevé, éventuellement en mélange. La zone de polycondensation ($Z_3$) peut être avantageusement suivie d'une zone de transport et de refroidissement ($Z_4$). Un tel enchaînement est présenté schématiquement **Figure 1.**

De manière préférée, dans le cadre de l'invention, toutes les étapes de réaction et de polycondensation permettant d'aboutir au polyamide désiré à partir du ou des monomères sélectionnés sont réalisées dans une extrudeuse unique. De manière avantageuse, la zone d'introduction du ou des monomères, la zone de mélange du ou des monomères, la zone d'isolement permettant de former un bouchon de matière en cours d'acheminement lorsqu'elle est présente, et la zone de polycondensation, voire la zone de transport et de refroidissement finale lorsqu'elle est présente, sont rassemblées dans une extrudeuse unique. La zone d'introduction du ou des monomères est alors située en entrée d'extrudeuse et le polyamide souhaité est récupéré en sortie d'extrudeuse, après la zone de polycondensation, voire la zone de transport et de refroidissement.

Bien entendu, il serait possible de réaliser ces différentes étapes dans deux extrudeuses co-rotatives positionnées en série en segmentant la zone de polycondensation notamment.

Dans une extrudeuse, chaque vis d'acheminement est constituée de différents éléments qui se succèdent selon le sens d'acheminement. Ces différents éléments sont placés les uns à côté des autres sur un arbre de rotation. Dans une extrudeuse co-rotative toutes les vis d'acheminement tournent dans le même sens, qui correspond le plus souvent au sens anti-horaire, Les éléments sont situés les uns à côté des autres sur une même ligne dans le cas d'une extrudeuse linéaire, ou sur un cercle dans le cas d'une extrudeuse annulaire. Les différentes vis d'acheminement constitutives d'une extrudeuse présentent toutes un même diamètre qui reste constant tout le long de la vis d'acheminement. Le plus souvent, ce diamètre appartient à la gamme allant de 6 à 134 mm. En général, les éléments situés dans un même plan transversal à la direction d'acheminement sont tous identiques. La **Figure 2** représente schématiquement les deux vis d'acheminement **1** et **2** d'une extrudeuse bi-vis, chacune étant constituée d'une série d'éléments notés respectivement $3_{11}...3_{1n}$ et $3_{21}...3_{2n}$ montés sur les arbres $4_1$ et $4_2$. La **Figure 3,** quant à elle, représente schématiquement les douze vis d'acheminement **1** à **12,** d'une extrudeuse 12-vis, chacune étant constituée d'une série d'éléments notés respectivement $3_{11}...3_{1n}$, $3_{21}...3_{2n},...3_{121}...3_{12n}$. montés sur les arbres $4_1$, $4_2...4_{12}$ de chacune des douze vis.

La vitesse de rotation des vis d'acheminement dépend de la nature de l'extrudeuse, mais est identique pour toutes les vis constitutives de l'extrudeuse. La vitesse de rotation de la vis sera, en général, de 50 rpm à 6000 rpm en fonction de l'extrudeuse.

Lorsque plusieurs monomères, et en particulier un couple de monomères précédemment cités, sont utilisés, les monomères peuvent être introduits dans l'extrudeuse, avec un excès du monomère le plus volatil, typiquement la diamine. En effet, cet excès peut être nécessaire pour compenser les pertes en monomère volatil qui peuvent intervenir le long de l'extrudeuse. Cette compensation peut s'avérer nécessaire pour atteindre des avancements élevés de la réaction de polycondensation. Le rapport stoechiométrique des monomères introduits peut, par exemple, varier de 1,2 à 0,8, typiquement de 1,1 à 0,9. On utilisera donc, avantageusement un excès stoechiométrique en monomère le plus volatile, correspondant à un rapport stoechiométrique pouvant aller jusqu'à 1,2.

L'introduction des monomères dans la zone d'introduction peut être réalisée directement avec l'excès stoechiométrique choisi. Il est également possible de réaliser l'introduction des monomères dans la zone d'introduction avec un rapport stoechiométrique de 1 et d'introduire ultérieurement le monomère qui doit être introduit en excès. Une telle introduction peut notamment être réalisée dans la zone de polycondensation, de préférence avant le dernier tronçon de cisaillement présent.

L'utilisation d'un excès d'un des deux monomères permet, notamment, de limiter, si on le souhaite, les masses molaires finales et/ou générer des polyamides fonctionnalisés acide ou amine.

L'extrudeuse utilisée dans le cadre de l'invention présente les séquences nécessaires pour permettre de réaliser :

le mélange du ou des monomères introduits, puis de préférence la formation d'un bouchon de matière renouvelé de manière continue et rendant le passage pour la matière hermétique aux vapeurs ; et enfin une polycondensation suffisante pour atteindre le polyamide désiré, avec des opérations des éliminations du ou des sous-produits de polycondensation formée.

Un élément de transport correspond à un élément unitaire de vis à 1, 2 ou 3 filets (mono, bi ou tri lobés) avec un pas plus ou moins important. Un élément de transport peut être nommé de la façon suivante :

**S X/A/Y** : un élément de transport avec un filet qui tourne vers la droite (A=R) correspondant au sens horaire ou vers la gauche (A=L) correspondant au sens anti-horaire (qui correspond le plus souvent au sens de rotation des vis d'acheminement) et avec un pas de X mm avec un élément de longueur Y mm.

Un élément tournant dans le sens inverse au sens de rotation des vis d'acheminement (élément de type R dans le cas où les vis d'acheminement tournent dans le sens anti-horaire), facilitera le transport de la matière dans le sens d'acheminement alors qu'un élément tournant dans le sens de rotation des vis d'acheminement (élément de type L dans le cas où les vis d'acheminement tournent dans le sens anti-horaire), s'opposera au transport de la matière dans le sens d'acheminement.

Un élément tournant dans le sens inverse au sens de rotation des vis d'acheminement est appelé « élément direct » et un élément tournant dans le sens de rotation des vis d'acheminement est appelé «élément inverse ».

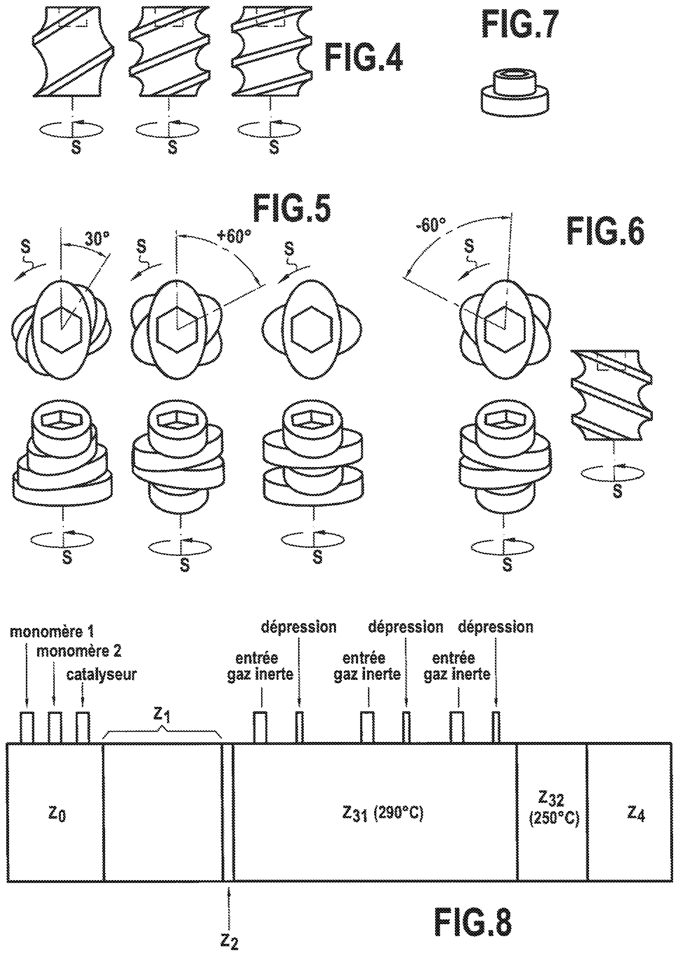

Sur la **Figure 4,** des éléments de transport direct dans le cas où les vis d'acheminement tournent dans le sens anti-horaire avec différents pas sont représentés.

Des exemples d'éléments de transport dans le sens d'acheminement de la matière (transport direct), dans le cas où les vis d'acheminement tournent dans le sens anti-horaire, peuvent être nommés comme suit :

S 26/R/26 (nommé également 1D) correspond à un élément de transport direct vers la droite avec un pas de 26 mm, et une longueur totale égale au diamètre de 26 mm.
S 19.5/R/26 (nommé également 0.75D) correspond à un élément de transport direct avec un pas de 19.5 mm, et une longueur totale égale au diamètre de 26 mm.
S 39/R/26 (nommé également 1.5D) correspond à un élément de transport direct avec un pas de 39 mm, et une longueur totale égale au diamètre de 26 mm,

Dans le cadre de l'invention, les éléments de transport à deux filets (bi lobés) sont préférés.

Un élément de cisaillement correspond à un « bloc malaxeur » (« kneading bloc » en anglais) constitué d'un enchaînement d'ailettes mono, bi ou trilobées, les ailettes étant décalées angulairement entre elles selon le sens de rotation de l'élément. Il peut comporter de 4 à 9 ailettes. Les ailettes peuvent être décalées d'un angle plus ou moins important. Cet angle peut, notamment, être de 30, 45, 60 ou 90°, Un tel élément permet le mélange de la matière et facilite son travail et donc les réactions qui doivent se produire.

Dans le cadre de l'invention, un élément de cisaillement constitué d'ailettes bilobées est préféré.

La **Figure 5** présente, de la gauche vers la droite, des éléments de cisaillement selon une vue de face (en haut) et de profil (en bas) comprenant, chacun, quatre ailettes décalées d'un angle de 30°, 60° et 90° dans le sens horaire (décalées vers la droite), donc opposé au sens S de rotation des vis lorsque celles-ci tournent selon le sens anti-horaire, et qui facilite le transport de la matière dans le sens d'acheminement.

Les éléments de cisaillement peuvent être nommés comme suit :

**KB X/Y/A/Z** : Elément de cisaillement (« Kneading Block » : KB) avec Y ailettes décalées d'un angle de X ° entre elles vers la droite (A=R) ou vers la gauche (A=L), sur un élément de longueur total de Z mm.

KB 30/4/R/26 (également nommé 30°1D) correspond à un élément de cisaillement avec quatre ailettes décalées d'un angle de 30 ° entre elles vers la droite, et une longueur totale égale au diamètre de 26 mm,

KB 60/4/R/26 (également nommé 60°1D) correspond à un élément de cisaillement avec quatre ailettes décalées d'un angle de 60 ° entre elles vers la droite, et une longueur totale égale au diamètre de 26 mm.

KB 90/4/R/26 (également nommé 90°1D) correspond à un élément de cisaillement avec quatre ailettes décalées d'un angle de 90 ° entre elles, et une longueur totale égale au diamètre de 26 mm.

Un élément de rétention est un élément qui permet de ralentir la matière et a donc une action de compression sur cette dernière. Il peut s'agir d'un élément de cisaillement avec des ailettes décalées angulairement entre elles dans le sens de rotation des vis d'acheminement II peut également s'agir d'un élément de transport inverse tournant dans le sens de rotation des vis d'acheminement.

Dans le cadre de l'invention, on nomme donc élément de cisaillement un élément cisaillant qui tourne dans sens inverse du sens de rotation des vis d'acheminement (plutôt que de parler d'élément de cisaillement direct), par contre, on nommera élément de rétention, un élément de cisaillement qui tourne dans le sens de rotation des vis d'acheminement (plutôt que de parier d'élément de cisaillement inverse).

De même, on parlera d'élément de transport quand ce dernier tourne dans le sens inverse du sens de rotation des vis d'acheminement (plutôt que de parler d'élément de transport direct), par contre, on nommera élément de rétention, un élément de transport qui tourne dans le sens de rotation des vis d'acheminement (plutôt que de parler d'élément de transport inverse).

La **Figure 6** présente, de la gauche vers la droite, un élément de cisaillement selon une vue de face (en haut) et de profil (en bas) comprenant quatre ailettes décalées d'un angle de 60° dans le sens anti-horaire (décalées vers la gauche), donc dans le sens S de rotation des vis lorsque celles-ci tournent selon le sens anti-horaire, et un élément de transport dont les deux filets tournent dans le sens anti-horaire (vers la gauche), donc également dans le sens S de rotation des vis.

Ils correspondent donc à un élément de rétention qui correspondent à un élément de rétention cisaillant dans le premier cas et un élément de transport inverse dans le deuxième cas.

Un exemple d'élément de rétention cisaillant peut être nommé comme suit, dans le cas où les vis d'acheminement tournent dans le sens anti-horaire :

KB 60/4/L/26 (également nommé rev 60°1D) correspond à un élément de rétention cisaillant avec quatre ailettes décalées d'un angle de 60 ° entre elles vers la gauche, et d'une longueur totale égale au diamètre.

Un exemple d'élément de transport inverse peut être nommé comme suit, dans le cas où les vis d'acheminement tournent dans le sens anti-horaire :

S 26/L/26 (nommé également rev 1D) correspond à un élément de transport inverse avec un pas de 26 mm, et une longueur totale égale au diamètre.

Une telle nomenclature est celle utilisée par des fournisseurs d'éléments de vis et d'extrudeuse comme Extricom GmbH Blach Extruder & Components.

D'autres éléments capables de transporter, de cisailler et/ou de retenir la matière connus de l'homme de l'art, peuvent également être utilisés, L'homme de l'art étant capable d'évaluer les différentes capacités de transport, de cisaillement et de rétention de la matière d'un élément de vis, il les choisira en conséquence.

De manière préférée, l'extrudeuse utilisée dans le procédé selon l'invention comporte, sur chaque vis d'acheminement qui la constitue, au moins plusieurs tronçons enchaînant chacun au moins deux éléments de cisaillement et un élément de rétention. En particulier, l'extrudeuse utilisée comporte, dans la zone de mélange, des éléments de transport, sur chaque vis d'acheminement. De manière avantageuse, ces éléments de transport pourront être suivis par, au moins un, et notamment un ou deux, tronçon(s) de cisaillement enchaînant au moins un, notamment au moins deux, voire au moins trois, éléments de cisaillement Lorsque plusieurs éléments de cisaillement se succèdent, ils présenteront de préférence des ailettes décalées selon un angle qui augmente selon le sens inverse au sens de rotation des vis d'acheminement, dans le sens d'acheminement de la matière.

De manière avantageuse, sur chaque vis d'acheminement, la zone d'isolement est constituée d'un ou plusieurs éléments de rétrécissement du passage pour la matière, communément appelé bouchon par le spécialiste des éléments d'extrusion. Un exemple d'un tel élément, dont la partie correspondant au rétrécissement présente une longueur de 0,5D, est présenté **Figure 7.** Un tel élément de rétrécissement de la section de passage pour la matière permet d'éviter les pertes en monomère volatil, spécialement lorsqu'il est proche d'un dispositif d'élimination du ou des sous-produits de réaction formés (qui est de l'eau dans la majorité des cas) présent dans la zone de polycondensation qui suit La zone d'isolement est une zone où la matière continue d'avancer mais remplit tout le volume disponible pour son passage, évitant le passage de vapeur. C'est pourquoi, il est indiqué que dans cette zone, un bouchon de matière renouvelé de manière continue par acheminement de la matière est formé,

Cette zone d'isolement peut également être constituée par une succession d'au moins deux éléments de rétention créant une accumulation de matière qui vient alors remplir tout le volume correspondant au passage disponible, permettant ainsi de remplir la même fonction qu'un élément de rétrécissement du passage pour la matière.

La formation du bouchon de matière est réalisée, après l'introduction et le transport assurant le mélange du ou des monomères en entrée d'extrudeuse. Dans la zone de mélange du ou des monomères, puis dans la zone d'isolement entrainant la formation d'un bouchon de matière qui la suit, le ou les monomères sélectionnés sont transportés, puis cisaillés, à une température supérieure à leur température de fusion. Typiquement, dans la zone de mélange et dans la zone d'isolement lorsqu'elle est présente, la matière est maintenue à une température supérieure d'au moins 5 °C par rapport à la température de fusion du monomère ayant la température de fusion la plus haute (ou du seul monomère utilisé, dans le cas de l'utilisation d'un seul monomère amino-acide), tout en n'étant pas supérieure d'au plus 100°C par rapport à la température de fusion du monomère ayant la température de fusion la plus haute. C'est-à-dire que, lors de l'étape de mélange du ou des monomères et de l'étape de formation du bouchon lorsqu'elle est présente, la matière est maintenue à une température supérieure d'au plus 100°C par rapport à la température de fusion du monomère ayant le point de fusion le plus haut, et supérieure de plus de 5 °C. Dans la zone de mélange et dans la zone d'isolement, un gradient de montée en température est, de préférence, utilisé. En sortie de la zone d'Isolement, le mélange se trouvera, par exemple, à une température supérieure d'au moins 20°C, par rapport à la température de la zone d'introduction du ou des monomères.

Chaque vis d'acheminement comporte de préférence, dans la zone de polycondensation, au moins trois, notamment trois, quatre, cinq ou six, et de préférence, au moins quatre tronçons de cisaillement, enchaînant successivement chacun au moins deux éléments de cisaillement et un élément de rétention. De manière préférée, dans ces tronçons de cisaillement les ailettes seront décalées d'un angle croissant selon le sens inverse au sens de rotation des vis d'acheminement, dans le sens d'acheminement de la matière. Un tel tronçon de cisaillement correspond, avantageusement, à l'enchainement d'un élément de cisaillement comportant 4 ailettes décalées d'un angle de 60° selon le sens inverse au sens de rotation des vis d'acheminement, d'un élément de cisaillement comportant 4 ailettes décalées d'un angle de 90° selon le sens inverse au sens de rotation des vis d'acheminement, de façon à acheminer la matière dans le sens d'acheminement, et d'un élément de rétention qui peut être notamment un élément de transport inverse ou un élément de cisaillement comportant 4 ailettes décalées d'un angle de 60° selon le sens de rotation des vis d'acheminement.

De manière particulièrement avantageuse, chaque vis d'acheminement comporte, et de préférence de manière additionnelle aux tronçons de cisaillement précédemment décrits, dans la zone de polycondensation, au moins un tronçon de cisaillement enchaînant successivement au moins trois éléments de cisaillement et un élément de rétention. De manière préférée, les ailettes seront décalées d'un angle croissant du premier au troisième élément de cisaillement selon le sens inverse au sens de rotation des vis d'acheminement de façon à acheminer la matière dans le sens d'acheminement. Un tel tronçon de cisaillement correspond, avantageusement, à l'enchaînement d'un élément de cisaillement comportant 4 ailettes décalées d'un angle de 30° selon le sens inverse au sens de rotation des vis d'acheminement, d'un élément de cisaillement comportant 4 ailettes décalées d'un angle de 60° selon le sens inverse au sens de rotation des vis d'acheminement, d'un élément de cisaillement comportant 4 ailettes décalées d'un angle de 90° selon le sens inverse au sens de rotation des vis d'acheminement, de façon à acheminer la matière dans le sens d'acheminement, et d'un élément de rétention qui peut être notamment un élément de transport inverse ou un élément de cisaillement comportant 4 ailettes décalées d'un angle de 60° selon le sens de rotation des vis d'acheminement, de façon à retenir la matière.

Le procédé selon l'invention met en oeuvre au moins deux étapes d'élimination des sous-produits formés durant la réaction de polycondensation au sein de l'extrudeuse. Aussi, l'extrudeuse est également équipée d'au moins deux dispositifs d'évacuation du ou des sous-produits de réaction formés par la réaction de polycondensation (qui est de l'eau dans la majorité des cas). De tels dispositifs sont également nommés, dans la suite de la description, dispositifs de dégazage. Ces dispositifs, sont, en général situés dans la zone de polycondensation, Un tel dispositif peut notamment être prévu entre deux tronçons de cisaillement. Ils seront disposés au niveau d'un élément de transport, de préférence à pas d'hélice large. Un tel dispositif peut également être situé dans la zone de mélange. Un dispositif d'élimination du ou des sous-produits de polycondensation formés, et notamment de l'eau formée, peut être constitué d'une sortie sur l'extérieur à pression atmosphérique, ou de préférence d'une sortie reliée à un dispositif permettant de créer une zone de dépression dans l'extrudeuse, telle qu'une pompe à vide. Un tel dispositif permet notamment de réaliser une pression réduite, par exemple de 0,001 mbar à 500 mbar, et typiquement de 0,01 à 200 mbar au niveau de l'élément de l'extrudeuse à laquelle il est connecté.

La vapeur d'eau, ou plus généralement le ou les sous-produits de réaction générés par la réaction de polycondensation, et les matières de plus haut point d'ébullition comme les monomères et les oligomères, qui sont ainsi éliminés, peuvent être séparés par des dispositifs conventionnels de distillation, Le ou les monomères et/ou les oligomères récupérés au cours de cette séparation peuvent être réintroduits.

De manière avantageuse, l'extrudeuse est équipée d'au moins deux dispositifs d'évacuation de l'eau formée par la réaction de polycondensation, ou plus généralement du ou des sous-produits de réaction générés par la réaction de polycondensatlon, intégrant un système qui permet de réinjecter, dans l'extrudeuse, le ou les monomères entraînés avec l'eau formée, ou plus généralement avec le ou les sous-produits de réaction générés par la réaction de polycondensation. De tels dispositifs incluent, par exemple, un système de distillation ou un gaveur latéral (en anglais « side-feeder ») qui permet de créer une zone de dépression.

De manière préférée, les dispositifs d'évacuation de l'eau formée par la réaction de polycondensation (ou plus généralement du ou des sous-produits de réaction générés par la réaction de polycondensation), intégrant un système qui permet de réinjecter, dans l'extrudeuse, le ou les monomères entraînés avec l'eau formée permettent de créer une zone de dépression. Il peut également être prévu d'encadrer la sortie reliée à un dispositif de création d'une zone de dépression, de deux éléments de rétrécissement du passage pour la matière, afin encore de limiter la perte en monomères et/ou prépolymère.

Les zones de cisaillement et de dépression, ou plus généralement l'ensemble de la zone de polycondensation, est maintenue à une température supérieure aux températures de la zone de mélange et de la zone d'isolement, qui appartient, de préférence, à la gamme allant de 150 à 350°C, et de préférence de 250 et 320°C, C'est-à-dire que, lors de l'étape de polycondensation, la matière est maintenue à une température supérieure aux températures appliquées pendant les étapes de mélange et de formation du bouchon de matière, qui appartient, par exemple à la gamme allant de 150 et 350°C, et de préférence de 250 et 320 °C.

Bien entendu, la température optimale sera ajustée par l'homme du métier, en fonction du ou des monomères mis en jeu et du degré moyen de polymérisation souhaité. Il est possible que le dernier tronçon de cisaillement de la zone de polycondensation soit maintenu à une température plus basse que les tronçons précédents, par exemple à une température inférieure de 10 °C, typiquement de 20 °C, à celle des zones de cisaillement et de dépression précédentes.

Il peut également être avantageux que l'extrudeuse comporte une ou plusieurs entrées en gaz inerte anhydre tel que l'azote ou l'argon. Une telle entrée peut être prévue au niveau de la zone d'introduction du ou des monomères et/ou avant les dispositifs d'élimination de l'eau (ou plus généralement du ou des sous-produits de réaction générés par la réaction de polycondensation), dans la zone de polycondensation. Ceci permet d'améliorer l'élimination de l'eau formée au cours du procédé car le gaz inerte anhydre va se charger en eau, et ainsi faciliter son élimination. Cette introduction d'azote permet aussi de limiter la dégradation au cours de la réaction de polycondensation.

De manière avantageuse, les vis d'acheminement se termineront par une zone de transport et de refroidissement, Cette zone de transport, sera maintenue à une température inférieure à la température du dernier tronçon de la zone de polycondensation, par exemple, à une température inférieure de 10 à 20 °C par rapport à la température du dernier tronçon de la zone de polycondensation. La zone de transport et de refroidissement pourra comprendre au moins un élément de rétention pour augmenter encore le degré de polymérisation. Cette zone comportera, de préférence, un dispositif de dégazage afin de faciliter et de stabiliser la sortie de la matière, grâce à une diminution de la présence de vapeur, au niveau de la filière le plus souvent présente en sortie.

En sortie d'extrudeuse, tout système de granulation connu de l'homme du métier peut être utilisé comme la granulation sous eau ou sous air. Il est avantageux d'avoir une pompe à engrenage suivie par un système de filtration, en sortie de matière avant le système de granulation. La pompe à engrenage permet de contrôler le flux de matière en amont de la filière et stabiliser le débit de sortie. Une telle pompe à engrenage est appelée pompe de décharge.

L'extrudeuse utilisée dans le cadre de l'invention comporte un enchaînement d'éléments permettant de mener la réaction de polycondensation pendant un temps suffisant pour aboutir au degré moyen de polymérisation souhaité en sortie d'extrudeuse. L'enchaînement de ces éléments sera adapté par l'homme du métier, notamment en fonction du ou des monomères utilisés et du degré moyen de polymérisation souhaité.

De manière avantageuse, l'extrudeuse utilisée dans le procédé selon l'invention comporte, sur chaque vis d'acheminement qui la constitue, au moins 14 éléments de transport, et de préférence au moins 25 éléments de transport, au moins 18 éléments de cisaillement, et de préférence au moins 37 éléments de cisaillement, et au moins 6 éléments de rétention, et de préférence au moins 15 éléments de rétention. De préférence, l'extrudeuse utilisée comportera, sur chaque vis d'acheminement qui la constitue, au moins un, voire deux, trois ou quatre, éléments de rétrécissement du passage pour la matière.

La longueur de l'extrudeuse utilisée et ses éléments constitutifs sont sélectionnés de manière à obtenir un temps de séjour suffisant pour obtenir le polyamide désiré. En particulier, il a été mis en évidence qu'il était préférable d'utiliser une extrudeuse choisie parmi :

- les extrudeuses bi-vis présentant une longueur de travail d'au moins 50D, typiquement supérieure ou égale à 70D, avantageusement supérieure ou égale à 90D, et très avantageusement supérieure ou égale à 120D,
- les extrudeuses 3-vis planes présentant une longueur de travail d'au moins 33D, typiquement supérieure ou égale à 40D, avantageusement supérieure ou égale à 50D, et très avantageusement supérieure ou égale à 80D,
- les extrudeuses 4-vis planes présentant une longueur de travail d'au moins 24D, typiquement supérieure ou égale à 30D, avantageusement supérieure ou égale à 40D, et très avantageusement supérieure ou égale à 60D,
- les extrudeuses 6-vis planes présentant une longueur de travail d'au moins 16D, typiquement supérieure ou égale à 20D, avantageusement supérieure ou égale à 25D, et très avantageusement supérieure ou égale à 40D,
- les extrudeuses 8-vis planes présentant une longueur de travail d'au moins 12D, typiquement supérieure ou égale à 15D, avantageusement supérieure ou égale à 20D, et très avantageusement supérieure ou égale à 30D,
- les extrudeuses 4-vis annulaires présentant une longueur de travail d'au moins 36D, typiquement supérieure ou égale à 44D, avantageusement supérieure ou égale à 56D, et très avantageusement supérieure ou égale à 88D,
- les extrudeuses 6-vis annulaires présentant une longueur de travail d'au moins 29D, typiquement supérieure ou égale à 36D, avantageusement supérieure ou égale à 46D, et très avantageusement supérieure ou égale à 72D,
- les extrudeuses 8-vis annulaires présentant une longueur de travail d'au moins 240, typiquement supérieure ou égale à 28D, avantageusement supérieure ou égale à 36D, et très avantageusement supérieure ou égale à 56D,
- les extrudeuses 10-vis annulaires présentant une longueur de travail d'au moins 19D, typiquement supérieure ou égale à 24D, avantageusement supérieure ou égale à 31D, et très avantageusement supérieure ou égale à 48D, et
- les extrudeuses 12-vis annulaires présentant une longueur de travail d'au moins 14D, typiquement supérieure ou égale à 16D, avantageusement supérieure ou égale à 32D, et très avantageusement supérieure ou égale à 40D.

D représente le diamètre des vis d'acheminement. La longueur de travail au sein d'une extrudeuse peut être définie comme la longueur des tronçons constitués exclusivement d'éléments de cisaillement et d'éléments de rétention et comportant un enchaînement successif d'au moins quatre de ces éléments.

De telles longueurs de travail notamment, avec une succession de zones de cisaillement de la matière et de zones de dépression dans la zone de polycondensation, permet d'atteindre des temps de réaction suffisants et les degrés moyens de polymérisation souhaités.

Le temps de séjour dans l'extrudeuse de la matière sera, de préférence, supérieur ou égal à 3 ou 4 minutes, et notamment de 3 à 30 minutes et typiquement de 6 à 20 minutes, en fonction du nombre de vis d'acheminement présentes dans l'extrudeuse.

De manière avantageuse, l'extrudeuse est une extrudeuse comportant plus de deux vis d'acheminement. L'utilisation d'une telle extrudeuse va encore permettre de réduire la longueur de travail nécessaire, pour obtenir des polyamides de degré de polymérisation équivalent ou supérieur, ce en obtenant un débit équivalent ou supérieur. De telles extrudeuses multi-vis présentent plusieurs avantages par rapport à une extrudeuse bi-vis.

Dans les zones de passage d'une vis à l'autre correspondant aux zones d'interpénétration, le mélange distributif et dispersif va être plus important que pour une bi-vis. Ces zones de passage sont des zones de cisaillement élongationnel et des zones de compression et de décompression de la matière. Le nombre de telles zones étant plus élevées que pour une extrudeuse bi-vis, la matière va y séjourner plus longtemps. De même, à temps de séjour identique, la fréquence de passage de la matière dans les zones de cisaillement augmente avec le nombre de vis d'acheminement. Par exemple, selon une approche empirique, cette fréquence de passage a été évaluée comme étant 3 fois supérieure dans le cas d'une extrudeuse 12-vis annulaire, par rapport à une extrudeuse bi-vis.

L'extraction de l'eau (ou plus généralement du ou des sous-produits de réaction générés par la réaction de polycondensation), va être plus efficace dans une multi-vis que dans une bi-vis. Le renouvellement de la matière et le rapport surface d'échange matière/pression réduite sur volume de matière sont plus importants.

L'introduction du ou des monomères est facilitée car la surface disponible au niveau de la zone d'introduction est plus importante sur une multi-vis que sur une bi-vis équivalente.

Comme exemples d'extrudeuse muiti-vis disponibles sur le marché, on peut citer l'extrudeuse annulaire douze vis RE « ring extruder » d'Extricom et les extrudeuses quatre et huit vis linéaires de la gamme WDR de Technovel.

Les débits de production qui peuvent être atteints avec le procédé selon l'invention sont dépendants de l'extrudeuse utilisée. En particulier, les débits de polyamide produit varient de 2 à 15 kg/h sur une extrudeuse bi-vis de diamètre D 26 mm, de 3 à 110 kg/h sur une extrudeuse de diamètre D 32 mm de longueur 110D et de 100 à 300 kg/h sur une extrudeuse de diamètre D 43 à 60 mm. Les débits de matière vont de 5 à 40 kg/h sur une extrudeuse 12-vis de diamètre D 18 mm et de longueur 34D et de 10 à 80 kg/h pour une longueur de 40D.

Le procédé selon l'invention peut utiliser ou ne pas utiliser de catalyseur. Si un catalyseur est utilisé, il peut être introduit séparément ou en mélange avec un monomère. Son introduction peut se faire dans la zone d'introduction du ou des monomères, ou dans une zone de travail ultérieure, ou encore en deux endroits : par exemple, dans la zone d'introduction du ou des monomères, puis dans une zone de travail ultérieure.

Le catalyseur peut être typiquement : un phosphore pentavalent comme l'acide phosphorique ($H_3PO_4$) l'acide phosphoreux ($H_3PO_3$), l'acide hypophosphoreux ($H_3PO_2$), l'acide phénylphosphinique ($H_2PO_3Ph$), les acides poly-phosphoriques comme l'anhydride phosphorique, l'acide tetrapolyphosphorique, l'acide pyrophosphorique ($H_4P_2O_7$), l'acide trimetaphosphorique, le pentachlorure phosphorique, un ester phosphoreux comme la triphényl phosphite ($P(OPh)_3$),

un hypophosphite tel que l'ammonium hypophosphite, le sodium hypophosphite, l'acide borique et ses dérivés comme l'anhydride borique ($B_2O_3$). Un catalyseur capable d'absorber chimiquement l'eau, comme l'anhydride phosphorique ($P_2O_5$) ou l'acide pyrophosphorique ($H_4P_2O_7$), peut être avantageusement utilisé. Dans ce cas, son effet est double, il permet d'absorber une partie de l'eau formée lors de la réaction ou présente dans le ou les monomères utilisés et de catalyser la réaction. Des mélanges de catalyseurs peuvent également être utilisés.

De manière préférée, on utilisera l'anhydride phosphorique, en tant que catalyseur, introduit dans l'extrudeuse, en une quantité correspondant à un pourcentage relatif de la masse totale de monomères exprimé en unité « pcr », de préférence, compris entre 0,01 pcr et 1 pcr. Un tel catalyseur peut être utilisé seul, ou en complément d'un autre catalyseur. L'anhydride phosphorique peut aussi être dissous dans le diméthylsulfoxyde (DMSO) avant d'être solubilisé dans un des monomères fondus.

Lorsqu'il est impossible d'introduire dans l'extrudeuse l'anhydride phosphorique de manière satisfaisante et que le DMSO ne peut pas être utilisé, il est conseillé de le substituer par de l'acide phosphorique. Les quantités introduites exprimées en unité « pcr » sont alors comprises entre 0,01 pcr et 0,1 pcr, de préférence entre 0,04 pcr et 0,07 pcr.

Il est également possible d'introduire dans l'extrudeuse, séparément ou en mélange avec un monomère, tout additif usuel utilisé dans la préparation de polyamides, tels que des anti-oxydants, des stabilisateurs UV, des agents nucléants, ou encore des pigments. De même, il est possible d'introduire dans l'extrudeuse tout composé pouvant être classiquement greffé sur une chaîne polyamide, on entend par là une substitution de l'hydrogène lié à l'azote de la liaison amide ou une réaction avec les fonctions amines et acides. On choisira un mode d'incorporation permettant d'éviter les réactions des composés à greffer avec les fonctions amines et acides des monomères, par exemple par une injection au niveau d'une zone de la ligne d'extrusion où le rendement de la réaction est suffisamment élevé.

Il peut également être envisagé d'introduire un ou plusieurs monomères comportant plus de deux fonctions acide ou amine, afin d'obtenir des structures branchées.

Il peut encore être envisagé d'introduire un ou plusieurs allongeurs de chaînes, afin d'accélérer l'augmentation des masses molaires et/ou d'obtenir des polyamides de plus haute masse molaire.

L'invention a également pour objet les extrudeuses adaptées pour la mise en oeuvre d'un procédé selon l'invention. L'invention concerne donc les extrudeuses qui présentent l'une ou l'autre des caractéristiques précédemment décrites, seules ou en combinaison, voire toutes les caractéristiques précédemment décrites qui sont notamment :

- l'extrudeuse comporte plusieurs zones qui se succèdent dans le sens d'acheminement de la matière, afin de produire selon un procédé continu, le polyamide désiré : une zone d'introduction ($Z_0$) du ou des monomères, suivie d'une zone de mélange ($Z_1$), suivie d'une zone d'isolement ($Z_2$) permettant la formation d'un bouchon de matière renouvelé de façon continue par acheminement de la matière, suivie d'une zone de polycondensation ($Z_3$) ; La zone de polycondensation ($Z_3$) peut être suivie d'une zone de transport et de refroidissement ($Z_4$);
- l'extrudeuse, comporte, sur chaque vis d'acheminement qui la constitue, plusieurs, de préférence au moins quatre, tronçons de cisaillement enchaînant chacun au moins deux éléments de cisaillement et un élément de rétention ; De telles zones de cisaillement sont de préférence présentes, à la fois dans la zone de mélange et dans la zone de polycondensation ;
- l'extrudeuse, comporte, sur chaque vis d'acheminement qui la constitue, au niveau de la zone de mélange, plusieurs, de préférence au moins trois ou quatre, éléments de transport, avantageusement suivis d'au moins un, et notamment un ou deux, tronçon(s) de cisaillement enchaînant au moins un, de préférence au moins deux, voire au moins trois, éléments de cisaillement. Les éléments de cisaillement présenteront, de préférence, des ailettes décalées selon un angle qui augmente selon le sens inverse au sens de rotation des vis d'acheminement, dans le sens d'acheminement de la matière ;
- La zone de mélange peut comporter un dispositif de dégazage ;
- la zone d'isolement peut être constituée par un ou plusieurs éléments assurant un rétrécissement du passage pour la matière ou par une succession d'au moins un, de préférence d'au moins deux éléments de rétention ;
- l'extrudeuse utilisée comporte, dans la zone de polycondensation, sur chaque vis d'acheminement qui la constitue, au moins un, et notamment deux, trois ou quatre, tronçon(s) de cisaillement enchaînant au moins deux éléments de cisaillement et un élément de rétention ;
- l'extrudeuse utilisée comporte, dans sa zone de polycondensation, sur chaque vis d'acheminement qui la constitue, au moins un, et notamment un ou deux, tronçon(s) de cisaillement enchaînant au moins trois éléments de cisaillement et un élément de rétention ;
- l'extrudeuse utilisée comporte, dans sa zone de polycondensation, sur chaque vis d'acheminement qui la constitue, au moins un tronçon de cisaillement enchaînant un élément de cisaillement comportant 4 ailettes décalées d'un angle de 30° selon le sens inverse au sens de rotation des vis d'acheminement, un élément de cisaillement comportant 4 ailettes décalées d'un angle de 60° selon le sens inverse au sens de rotation des vis d'acheminement, un élément de cisaillement comportant 4 ailettes décalées d'un angle de 90° selon le sens inverse au sens de rotation des vis d'acheminement, de façon à acheminer la matière dans le sens d'acheminement, et un élément de rétention qui peut être notamment un élément de transport inverse ou un élément de cisaillement comportant 4 ailettes décalées d'un angle de 60° selon le sens de rotation des vis d'acheminement, de façon à retenir la matière,

- l'extrudeuse est reliée à au moins deux dispositifs d'évacuation de l'eau formée par la réaction de polycondensation (ou plus généralement du ou des sous-produits de réaction générés par la réaction de polycondensation), équipés d'un système permettant de réinjecter dans l'extrudeuse le ou les monomères entraînés avec le ou les sous-produits de condensation formés. De préférence, de tels dispositifs permettent de créer des zones de dépression au sein de l'extrudeuse ; De tels dispositifs sont avantageusement situés dans la zone de polycondensation. Ils sont, de préférence, précédés d'une entrée en gaz inerte et peuvent également être précédés, et éventuellement succédés par un élément de rétrécissement du passage pour la matière ;

- l'extrudeuse comporte un enchaînement d'éléments permettant de mener la réaction de polycondensation pendant un temps suffisant pour aboutir au degré de polymérisation souhaité en sortie d'extrudeuse ; le temps de séjour de la matière dans l'extrudeuse est, de préférence, supérieur ou égal à 3 ou 4 minutes, et notamment de 3 à 30 minutes et typiquement, de 6 à 20 minutes,

- l'extrudeuse est choisie parmi :

  ◦ les extrudeuses bi-vis présentant une longueur de travail d'au moins 50D, typiquement supérieure ou égale à 70D, avantageusement supérieure ou égale à 90D, et très avantageusement supérieure ou égale à 120D,
  ◦ les extrudeuses 3-vis planes présentant une longueur de travail d'au moins 33D, typiquement supérieure ou égale à 40D, avantageusement supérieure ou égale à 50D, et très avantageusement supérieure ou égale à 80D,
  ◦ les extrudeuses 4-vis planes présentant une longueur de travail d'au moins 24D, typiquement supérieure ou égale à 30D, avantageusement supérieure ou égale à 40D, et très avantageusement supérieure ou égale à 60D,
  ◦ les extrudeuses 6-vis planes présentant une longueur de travail d'au moins 16D, typiquement supérieure ou égale à 20D, avantageusement supérieure ou égale à 25D, et très avantageusement supérieure ou égale à 40D,
  ◦ les extrudeuses 8-vis planes présentant une longueur de travail d'au moins 12D, typiquement supérieure ou égale à 15D, avantageusement supérieure ou égale à 20D, et très avantageusement supérieure ou égale à 30D,
  ◦ les extrudeuses 4-vis annulaires présentant une longueur de travail d'au moins 36D, typiquement supérieure ou égale à 44D, avantageusement supérieure ou égale à 56D, et très avantageusement supérieure ou égale à 88D,
  ◦ les extrudeuses 6-vis annulaires présentant une longueur de travail d'au moins 29D, typiquement supérieure ou égale à 36D, avantageusement supérieure ou égale à 46D, et très avantageusement supérieure ou égale à 72D,
  ◦ les extrudeuses 8-vis annulaires présentant une longueur de travail d'au moins 24D, typiquement supérieure ou égale à 28D, avantageusement supérieure ou égale à 36D, et très avantageusement supérieure ou égale à 56D,
  ◦ les extrudeuses 10-vis annulaires présentant une longueur de travail d'au moins 19D, typiquement supérieure ou égale à 24D, avantageusement supérieure ou égale à 31D, et très avantageusement supérieure ou égale à 48D, et
  ◦ les extrudeuses 12-vis annulaires présentant une longueur de travail d'au moins 14D, typiquement supérieure ou égale à 16D, avantageusement supérieure ou égale à 32D, et très avantageusement supérieure ou égale à 40D ;

- l'extrudeuse est une extrudeuse comportant plus de deux vis d'acheminement.

Une telle extrudeuse sera reliée à une unité de commande permettant notamment de contrôler les débits d'alimentation en monomère(s) et la vitesse de rotation des vis d'acheminement. De plus, l'extrudeuse sera équipée de dispositifs de chauffage et de régulation de la température, permettant de maintenir la température souhaitée, correspondant aux températures précédemment mentionnées, dans chacune des zones concernées.

Les exemples qui suivent permettent d'illustrer l'invention.

**Exemples 1 à 6 :**

Une des extrudeuses utilisées dans les essais 2 et 5 est schématiquement présentée **Figure 8.** Les vis de l'extrudeuse tournent de façon co-rotative, selon le sens anti-horaire.

Pour l'ensemble des essais, une pompe de décharge dit « melt-pump » (Modèle EX22, Eprotech) est positionnée après la zone $Z_4$.

Un polyamide 6-10 est polycondensé comme suit à partir d'hexaméthylènediamine et d'acide sébacique sur une extrudeuse bi-vis co-rotative de marque TSA ayant un diamètre (D) de 26 mm et de rapport longueur/diamètre (L/D) de 80 (Essai 1 et 3) ou 110 (Essai 2 et 4).

Pour les essais 1, 2, 3, 5 et 6, l'amine chauffée à 70 °C et l'acide à 150°C sont introduits séparément sous forme liquide dans l'extrudeuse avec un excès d'amine, le rapport molaire amine/acide est de 1,046. Le débit total est de 6 kg/h.

Pour l'essai 4, l'amine chauffée à 70 °C sous forme liquide et l'acide gardé forme solide à température ambiante sont introduits séparément dans l'extrudeuse avec un excès d'amine, le rapport molaire amine/acide est de 1,046. Le débit total est de 6 kg/h.

Pour les essais 3, 4 et 6, le catalyseur utilisé est le $P_2O_5$. Pour les essais 3 et 6, il est préalablement dissous dans le diméthylsulfoxyde (DMSO) puis il est mélangé avec l'acide sébacique dans un rapport massique 0,1/99,9 pour avoir une teneur finale de 0,06 pcr.

Pour l'essai 4, le $P_2O_5$, est directement mélangé dans l'acide solide dans un rapport massique 0,1/99,9 pour avoir une teneur finale de 0,06 pcr.

Pour l'essai 5, le catalyseur utilisé est le $H_3PO_4$. Il est mélangé avec l'acide sébacique fondu dans un rapport massique 0,1/99,9 pour avoir une teneur finale de 0,06 pcr.

Dans la zone d'introduction $Z_0$ et dans la zone de mélange $Z_1$ des monomères et dans la zone $Z_2$ de formation du bouchon de matière, la température est de 140-200 °C. Pour les essais 1, 2, 3, 5 et 6, la zone de mélange de monomères et la zone de formation du bouchon de matière est constitué d'un enchaînement [S26/R/26]-[KB30/4/R/263~[KB90/4/R/26]-[S26/R/26].

Pour l'essai 4, la zone de mélange des monomères et la zone de formation du bouchon de matière se termine par un enchaînement [S26/R/26]-[K830/4/R/26]-[KB60/4/R/26]-[K890/4/R/26], terminé par un élément de rétrécissement (bouchon). La température est de 200 °C au niveau du bouchon.

Ensuite, dans la zone de polycondensation, enchaînant des tronçons de cisaillement et au moins une zone de dépression à 100 mbar formant une zone $Z_{31}$, la température est de 290 °C. Cette zone de polycondensation comporte différents enchaînements [KB60/4/R/26]-[KB90/4,/R/26]-[KB60/4/L/26] ou [S26/L/26], et au moins un enchaînement [KB30/4/R/26]-[HB60/4/R/26]-[K890/4/R/26]-[KB60/4/L/26] ou [S26/L/26], qui pour certain(s) sont séparés par une zone d'introduction d'azote suivie d'une zone de dépression. Différentes zones d'introduction d'azote sont présentes, tout d'abord au niveau de l'introduction des monomères, puis avant chaque zone de dépression le long de l'extrudeuse avec un débit total de 4 L/h. Dans le dernier tronçon $Z_{32}$ de la zone de polycondensation, la température est abaissée à 250 °C et une ouverture est présente pour le dégazage de la matière. Une zone de transport $Z_4$ termine l'extrusion. Les températures de la zone $Z_4$ et de la pompe de décharge (« melt-pump ») sont régulées à la même température que celle de la zone $Z_{32}$ à savoir 250°C.

Pour les essais 1, 3, 4 et 5, la longueur totale des vis d'acheminement est de 80D et deux zones de dépression sont présentes ce qui correspond à une longueur de travail de 50D. Les essais 3 et 4 utilisent le pentoxyde de phosphore ($P_2O_5$) comme catalyseur et l'essai 5 utilise l'acide phosphorique ($H_3PO_4$). Les deux catalyseurs sont utilisés à une teneur de 0,06pcr par rapport à la masse totale des monomères.

Pour les essais 2 et 6, la longueur totale des vis d'acheminement est de 110D et trois zones de dépression sont présentes ce qui correspond à une longueur de travail de 70D. L'essai 6 utilise un catalyseur (pentoxyde de phosphore) à une teneur de 0,06pcr par rapport à la masse totale des monomères.

**Exemple 7 à 10** :

Les essais 7 à 10 sont réalisés dans des conditions identiques à l'essai 1 (hormis les différences mentionnées ci-après), mais ils ont été réalisés sur une extrudeuse multi-vis de 12 vis de diamètre 18 mm avec un débit total de 11 kg/h.

Pour les essais 7 et 9, deux zones de dépression sont présentes et l'extrudeuse a une longueur totale de 30D ce qui correspond à une longueur de travail de 16D. L'essai 7 utilise un catalyseur (pentoxyde de phosphore) à une teneur de 0,06pcr par rapport à la masse totale des monomères, Il a été préalablement solubilisé dans le DMSO avant son ajout dans l'acide sébacique.

Pour les essais 8 et 10, quatre zones de dépression sont présentes et l'extrudeuse a une longueur totale de 40D ce qui correspond à une longueur de travail de 22D. L'essai 10 utilise un catalyseur (pentoxyde de phosphore) à une teneur de 0,06pcr par rapport à la masse totale des monomères. Il a été préalablement solubilisé dans le DMSO avant son ajout dans l'acide sébacique.

L'indice de viscosité (« viscosity number : VN ») est déterminé en suivant les directives de la norme ISO 307 :2007. Le solvant utilisé pour former les solutions de polymère est un mélange de phénol et de dicholorobenzène avec une répartition massique de 50% chacun. Le polyamide est dissous à 135°C pendant 45 minutes pour une concentration finale de 5mg.mL. Après refroidissement à température ambiante, le temps d'écoulement des solutions de polymères et du mélange solvant seul sont mesurés à 25°C dans un bain thermo staté à l'aide d'un viscosimètre de type Ubbeldohde comportant un capillaire avec un diamètre interne de 1,03 mm +/- 2% (norme ISO3105).

Les masses molaires des polyamides sont déterminées par chromatographie d'exclusion stérique en utilisant comme solvant d'élution le 1,1,1,3,3,3-hexafluoro-2-propanol. Les polyamides sont dissous dans ce même solvant à une concentration de 1mg.mL et le débit d'élution est de 0,75 mL.min$^{-1}$. Le polymère utilisé pour la calibration entre masses molaires et le temps d'élution est typiquement le polyméthacrylate de méthyle.

Les propriétés mécaniques ont été mesurées après mise en forme par injection sur des éprouvettes H2 à une vitesse de traction de 50 mm/min, selon la norme ISO 527. Le pourcentage d'allongement à la rupture et la contrainte au seuil ont été relevés.

**Essais avec la bi-vis de 26 mm**

| Essai | 1 | **2** | **3** | 4 | **5** | **6** |
|---|---|---|---|---|---|---|
| L/D | 80 | **110** | **80** | 80 | 80 | **110** |
| Zone de dépression | 2 | **3** | **2** | 2 | 2 | **3** |
| Catalyseur | | | **0,06** | 0,06 | 0,06 | **0,06** |
| Catalyseur | | | **P2O5** | H3PO4 | P2O5 | **P2O5** |
| Température zone $Z_{31}$ | 290 | 290 | **290** | 290 | 290 | **290** |
| IV ml/g | 111 | **160** | **164** | 152 | 159 | **218** |
| Mn | 20,5 | **31,2** | **31,4** | 28,4 | 30,7 | **40,9** |
| Mw | 38,1 | **63,3** | **69,8** | 55,3 | 63,3 | **86,1** |
| IP | 1,86 | **1,98** | **2,05** | 1,98 | 1,98 | **2,1** |
| Allongement à la rupture (%) | 25 | **83** | **93** | **89** | **91** | **103** |
| Contrainte au seuil (MPa) | 57 | **58** | **59** | **54** | **58** | **61** |

**Essais avec la multi-vis (12)**

| Essai | 7 | 8 | **9** | 10 |
|---|---|---|---|---|
| L/D | 30 | 40 | **30** | 40 |
| Zone de vide | 2 | 4 | **2** | 4 |
| Catalyseur | | | **0,06** | 0,06 |
| Température zone $Z_{31}$ | 290 | 290 | **290** | 290 |
| IV ml/g | 113 | 162 | **152** | 219 |
| Mn | 20,5 | 31,6 | **29,3** | 44,6 |
| Mw | 38,1 | 63,5 | **58,3** | 95,4 |
| IP | 1,86 | 2,01 | **1,98** | 2,13 |
| Allongement à la rupture (%) | 35 | 90 | **95** | 105 |
| Contrainte au seuil (MPa) | 58 | 57 | **59** | 61 |

Il ressort des résultats obtenus :

- Les essais 1 et 2 montrent l'effet de la longueur de l'extrudeuse sur le produit en sortie.

- Les essais 3, 4 et 5 montrent l'effet de la présence du catalyseur par rapport aux exemples 1 et 2.

- Les essais 3 et 4 montrent l'intérêt d'avoir les deux monomères sous forme liquide.

- Les essais 7 et 8 montrent l'intérêt d'une multi-vis par rapport à une bi-vis et les essais 9 et 10 montrent l'effet de la présence du catalyseur par rapport aux essais 7 et 8.

**Revendications**

1. Procédé de préparation d'un polyamide par polycondensation à partir d'un ou plusieurs monomères adaptés à la préparation de polyamide **caractérisé en ce que** :

   - le ou les monomères sélectionnés, sont introduits, sans réaction préalable et sans préparation préalable du sel correspondant, dans une extrudeuse comportant au moins deux vis d'acheminement tournant de manière co-rotative,
   - toutes les étapes de réaction et de polycondensation, en partant initialement du ou des monomères sélectionnés, et permettant d'aboutir au polyamide désiré, sont menées dans une extrudeuse unique comportant au moins deux vis d'acheminement tournant de manière co-rotative,
   - la polycondensation est réalisée en réalisant au moins deux opérations d'évacuation du ou des sous-produit(s) formé(s) par la réaction de polycondensation,

   et **en ce qu'**il comporte les étapes successives suivantes :

   - une étape de mélange du ou des monomères sélectionnés,
   - une étape de polycondensation menée en réalisant successivement des opérations de cisaillement et de dépression sur la matière acheminée par les vis d'acheminement,
   - une étape de formation d'un bouchon de matière renouvelé de façon continue par acheminement de la matière sur les vis d'acheminement, entre les étapes de mélange et de polycondensation ; le dit bouchon de matière constitué de la matière en avancement remplissant tout le volume disponible pour le passage de la matière et constituant une zone qui est hermétique aux vapeurs, et notamment aux vapeurs de monomère qui peuvent être générées.

2. Procédé de préparation d'un polyamide selon la revendication 1 **caractérisé en ce que** le degré moyen de polymérisation ($DP_n$) du polyamide obtenu est au moins égal à 50, de préférence au moins égal à 100.

3. Procédé de préparation d'un polyamide selon la revendication 1 ou 2 **caractérisé en ce que** le polyamide obtenu présente une masse molaire moyenne en masse (Mw) au moins égal à 14000 g/mol, et de préférence appartenant à la gamme allant de 30000 à 100000 g/mol.

4. Procédé de préparation d'un polyamide selon l'une quelconque des revendications précédentes **caractérisé en ce que** le polyamide obtenu présente un indice de viscosité au moins égal à 80 ml/g, et de préférence appartenant à la gamme allant de 120 à 250 ml/g.

5. Procédé de préparation d'un polyamide selon l'une quelconque des revendications précédentes **caractérisé en ce que**, lors de l'étape de mélange du ou des monomères, et lors de l'étape de formation du bouchon, la matière est maintenue à une température supérieure d'au plus 100°C par rapport à la température de fusion du monomère ayant le point de fusion le plus haut, et supérieure de plus de 5 °C par rapport à la température de fusion du monomère ayant le point de fusion le plus haut.

6. Procédé de préparation d'un polyamide selon l'une quelconque des revendications précédentes **caractérisé en ce que**, lors de l'étape de polycondensation, la matière est maintenue à une température supérieure aux températures appliquées pendant les étapes de mélange et de formation du bouchon de matière, qui appartient, par exemple à la gamme allant de 150 et 350°C, et de préférence de 250 et 320 °C.

7. Procédé de préparation d'un polyamide selon l'une quelconque des revendications précédentes **caractérisé en ce que** l'extrudeuse utilisée comporte, sur chaque vis d'acheminement qui la constitue, plusieurs, de préférence au moins quatre, tronçons de cisaillement enchaînant chacun au moins deux éléments de cisaillement et un élément de rétention.

8. Procédé de préparation d'un polyamide selon l'une quelconque des revendications précédentes **caractérisé en ce que** l'extrudeuse utilisée comporte plusieurs zones qui se succèdent dans le sens d'acheminement de la matière, afin de produire selon un procédé continu, le polyamide désiré : une zone d'introduction $(Z_0)$ du ou des monomères, suivie d'une zone de mélange du ou des monomères $(Z_1)$, suivie d'une zone de polycondensation $(Z_3)$.

9. Procédé de préparation d'un polyamide selon la revendication 8 **caractérisé en ce que** la zone de mélange $(Z_1)$ et la zone de polycondensation $(Z_3)$ sont séparées par une zone d'isolement $(Z_2)$, afin d'éviter le passage de vapeurs de monomères.

10. Procédé de préparation d'un polyamide selon la revendication 9 **caractérisé en ce que** la zone d'isolement $(Z_2)$ est constituée, sur chaque vis d'acheminement, d'au moins un élément de rétrécissement du passage pour la matière ou d'au moins deux éléments de rétention.

11. Procédé de préparation d'un polyamide selon l'une quelconque des revendications 8 à 10 **caractérisé en ce que** l'extrudeuse utilisée comporte, dans la zone de mélange $(Z_1)$, sur chaque vis d'acheminement qui la constitue, plusieurs éléments de transports, suivi d'au moins un, et notamment un ou deux, tronçon(s) de cisaillement enchaînant au moins un, de préférence au moins deux éléments de cisaillement et un élément de rétention.

12. Procédé de préparation d'un polyamide selon l'une quelconque des revendications 8 à 11 **caractérisé en ce que** l'extrudeuse utilisée comporte, dans la zone de polycondensation $(Z_3)$, sur chaque vis d'acheminement qui la constitue, au moins trois, et notamment trois, quatre, cinq ou six tronçon(s) de cisaillement enchaînant au moins deux éléments de cisaillement et un élément de rétention.

13. Procédé de préparation d'un polyamide selon la revendication 12 **caractérisé en ce que** l'extrudeuse utilisée comporte, également dans sa zone de polycondensation $(Z_3)$, sur chaque vis d'acheminement qui la constitue; au moins un, et notamment un ou deux, tronçon(s) de cisaillement enchaînant au moins trois éléments de cisaillement et un élément de rétention.

14. Procédé de préparation d'un polyamide selon la revendication 11, 12 ou 13 **caractérisé en ce que** dans le(s) tronçon(s) de cisaillement, les éléments de cisaillements comportent des ailettes décalées d'un angle croissant selon le sens inverse au sens de rotation des vis d'acheminement, dans le sens d'acheminement de la matière.

15. Procédé de préparation d'un polyamide selon l'une quelconque des revendications précédentes **caractérisé en ce que** les opérations d'évacuation du ou des sous-produits formés par la réaction de polycondensation sont accompagnées d'une réinjection dans l'extrudeuse du ou des monomères entraînés avec le ou les sous-produits formés.

16. Procédé de préparation d'un polyamide selon l'une quelconque des revendications précédentes **caractérisé en ce que** les opérations d'évacuation du ou des sous-produits formés s'accompagnent de la création d'une zone de dépression au sein de l'extrudeuse.

17. Procédé de préparation d'un polyamide selon l'une quelconque des revendications précédentes **caractérisé en ce que** les opérations d'évacuation du ou des sous-produits formés sont précédées d'une Injection dans l'extrudeuse de gaz inerte.

18. Procédé de préparation d'un polyamide selon quelconque l'une des revendications précédentes **caractérisé en ce que** l'extrudeuse comporte un enchaînement d'éléments permettant de mener la réaction de polycondensation pendant un temps suffisant pour aboutir au taux de conversion souhaité en sortie d'extrudeuse.

19. Procédé de préparation d'un polyamide selon quelconque l'une des revendications précédentes **caractérisé en ce que** l'extrudeuse est choisie parmi :

   - les extrudeuses bi-vis présentant une longueur de travail d'au moins 50D, typiquement supérieure ou égale à 70D, avantageusement supérieure ou égale à 90D, et très avantageusement supérieure ou égale à 120D,
   - les extrudeuses 3-vis planes présentant une longueur de travail d'au moins 33D, typiquement supérieure ou égale à 40D, avantageusement supérieure ou égale à 50D, et très avantageusement supérieure ou égale à 80D,
   - les extrudeuses 4-vis planes présentant une longueur de travail d'au moins 24D, typiquement supérieure ou égale à 30D, avantageusement supérieure ou égale à 40D, et très avantageusement supérieure ou égaie à 60D,
   - les extrudeuses 6-vis planes présentant une longueur de travail d'au moins 16D, typiquement supérieure ou égale à 20D, avantageusement supérieure ou égale à 25D, et très avantageusement supérieure ou égale à 40D,
   - les extrudeuses 8-vis planes présentant une longueur de travail d'au moins 12D, typiquement supérieure ou égale à 15D, avantageusement supérieure ou égale à 20D, et très avantageusement supérieure ou égale à 30D,
- les extrudeuses 4-vis annulaires présentant une longueur de travail d'au moins 36D, typiquement supérieure ou égale à 44D, avantageusement supérieure ou égale à 56D, et très avantageusement supérieure ou égale à 88D,
- les extrudeuses 6-vis annulaires présentant une longueur de travail d'au moins 29D, typiquement supérieure ou égale à 36D, avantageusement supérieure ou égale à 46D, et très avantageusement supérieure ou égale à 72D,
- les extrudeuses 8-vis annulaires présentant une longueur de travail d'au moins 24D, typiquement supérieure ou égale à 28D, avantageusement supérieure ou égale à 36D, et très avantageusement supérieure ou égale à 56D,
- les extrudeuses 10-vis annulaires présentant une longueur de travail d'au moins 19D, typiquement supérieure ou égale à 24D, avantageusement supérieure ou égale à 31D, et très avantageusement supérieure ou égale à 48D, et
- les extrudeuses 12-vis annulaires présentant une longueur de travail d'au moins 14D, typiquement supérieure ou égale à 16D, avantageusement supérieure ou égale à 32D, et très avantageusement supérieure ou égale à 40D.

20. Procédé de préparation d'un polyamide selon l'une quelconque des revendications précédentes **caractérisé en ce que** l'extrudeuse est une extrudeuse comportant plus de deux vis d'acheminement.

21. Procédé de préparation d'un polyamide selon l'une quelconque des revendications précédentes **caractérisé en ce que** l'extrudeuse comporte, sur chaque vis d'acheminement qui la constitue, au moins 14 éléments de transport, et de préférence au moins 25 éléments de transport, au moins 18 éléments de cisaillement, et de préférence au moins 37 éléments de cisaillement, et au moins 6 éléments de rétention, et de préférence au moins 15 éléments de rétention.

22. Procédé de préparation d'un polyamide selon l'une quelconque des revendications précédentes **caractérisé en ce que** le temps de séjour de la matière dans l'extrudeuse est supérieur ou égal à 3 ou 4 minutes, et notamment de 4 à 30 minutes et typiquement, de 6 à 20 minutes.

23. Procédé de préparation d'un polyamide selon l'une quelconque des revendications précédentes **caractérisé en ce que** le ou les monomères introduits dans l'extrudeuse contiennent, de préférence, une teneur en eau inférieure à 5 % en masse, préférentiellement inférieure à 1 % en masse, plus préférentiellement inférieure à 0,6 % en masse.

24. Procédé de préparation d'un polyamide selon l'une quelconque des revendications précédentes **caractérisé en ce qu'**un couple de monomères constitué d'une diamine et d'un diacide est introduit dans l'extrudeuse et au moins deux opérations d'évacuation de l'eau formée par la réaction de polycondensation sont réalisées.

25. Procédé de préparation selon la revendication 24 **caractérisé en ce qu'**il utilise un excès stoechiométrique en monomère le plus volatile, correspondant, de préférence, à un rapport stoechiométrique pouvant aller Jusqu'à 1,2.

26. Procédé de préparation d'un polyamide selon l'une quelconque des revendications précédentes **caractérisé en ce que** le ou les monomères sont introduits dans l'extrudeuse sous une forme fusionnée liquide.

27. Procédé de préparation d'un polyamide selon l'une quelconque des revendications précédentes **caractérisé en ce qu'**il utilise un catalyseur choisi parmi les suivants :

un phosphore pentavalent comme l'acide phosphorique ($H_3PO_4$) l'acide phosphoreux ($H_3PO_3$), l'acide hypo-phosphoreux ($H_3PO_2$), l'acide phénylphosphinique ($H_2PO_3Ph$), les acides poly-phosphoriques comme l'anhydride phosphorique, l'acide tetrapolyphosphorique, l'acide pyrophosphorique ($H_4P_2O_7$), l'acide trimetaphos-phorique, le pentachlorure phosphorique, un ester phosphoreux comme la triphényl phosphite ($P(OPh)_3$), un hypophosphite tel que l'ammonium hypophosphite, le sodium hypophosphite, l'acide borique et ses dérivés comme l'anhydride borique ($B_2O_3$), l'anhydride phosphorique ($P_2O_5$) et l'acide pyrophosphorique ($H_4P_2O_7$), capable d'absorber chimiquement l'eau, étant préférés.

28. Extrudeuse adaptée pour la mise en oeuvre d'un procédé selon l'une quelconque des revendications précédentes.

**Patentansprüche**

1.  Verfahren zur Herstellung eines Polyamids durch Polykondensation aus einem oder mehreren Monomeren, die für die Herstellung von Polyamid geeignet sind, **dadurch gekennzeichnet, dass**:

    - das oder die ausgewählte(n) Monomer(e) ohne vorherige Reaktion und ohne vorherige Vorbereitung des entsprechenden Salzes in einen Extruder mit mindestens zwei Förderschnecken eingebracht werden, die gleichlaufend drehen,
    - alle Reaktions- und Polykondensationsschritte, zunächst ausgehend von dem oder den ausgewählten Monomer(en) und um das gewünschte Polyamid zu erhalten, in einem Einzelextruder mit mindestens zwei gleichlaufend drehenden Förderschnecken durchgeführt werden,
    - die Polykondensation erreicht wird, indem mindestens zwei Operationen der Beseitigung des Nebenproduktes (oder der Nebenprodukte), das (die) durch die Polykondensationsreaktion entstanden ist (sind), durchgeführt werden,

    und dass es die folgenden aufeinanderfolgenden Schritte umfasst:

    - einen Schritt des Mischens des oder der ausgewählten Monomers/Monomere,
    - einen Schritt der Polykondensation, der durchgeführt wird, indem nacheinander Operationen des Scherens und des Unterdrucks an dem von den Förderschnecken geförderten Material durchgeführt werden,
    - einen Schritt der Bildung eines Materialstopfens, der kontinuierlich erneuert wird, indem das Material zwischen den Schritten des Mischens und der Polykondensation auf die Förderschnecken befördert wird, wobei der Materialstopfen aus dem Materialvorschub besteht, der das gesamte für den Durchgang des Materials zur Verfügung stehende Volumen ausfüllt und einen Bereich bildet, der hermetisch gegen Dämpfe, insbesondere gegen Monomerdämpfe, die sich bilden können, abgedichtet ist.

2.  Verfahren zur Herstellung eines Polyamids gemäß Anspruch 1, **dadurch gekennzeichnet, dass** der durchschnittliche Polymerisationsgrad ($DP_n$) des erhaltenen Polyamids mindestens 50, vorzugsweise mindestens 100 beträgt.

3.  Verfahren zur Herstellung eines Polyamids gemäß Anspruch 1 oder 2, **dadurch gekennzeichnet, dass** das erhaltene Polyamid eine massegemittelte Molekülmasse (Mw) von mindestens 14000 g/mol und vorzugsweise im Bereich von 30.000 bis 100.000 g/mol aufweist.

4.  Verfahren zur Herstellung eines Polyamids gemäß einem der vorangehenden Ansprüche, **dadurch gekennzeichnet, dass** das erhaltene Polyamid einen Viskositätsindex von mindestens 80 ml/g und vorzugsweise im Bereich von 120 bis 250 ml/g aufweist.

5.  Verfahren zur Herstellung eines Polyamids gemäß einem der vorangehenden Ansprüche, **dadurch gekennzeichnet, dass** im Schritts des Mischens des oder der Monomers/Monomere und im Schritt der Bildung eines Materialstopfens das Material auf einer Temperatur gehalten wird, die höchstens 100 °C über der Schmelztemperatur des Monomers mit dem höchsten Schmelzpunkt beträgt und mehr als 5 °C über der Schmelztemperatur des Monomers mit dem höchsten Schmelzpunkt liegt.

6.  Verfahren zur Herstellung eines Polyamids gemäß einem der vorangehenden Ansprüche, **dadurch gekennzeichnet, dass** in dem Schritt der Polykondensation das Material auf einer Temperatur gehalten wird, die über den Temperaturen liegt, die während der Schritte des Mischens und der Bildung des Materialstopfens angewendet werden, die beispielsweise im Bereich von 150 bis 350 °C, vorzugsweise 250 bis 320 °C liegt.

7.  Verfahren zur Herstellung eines Polyamids gemäß einem der vorangehenden Ansprüche, **dadurch gekennzeichnet, dass** der verwendete Extruder auf jeder der ihn bildenden Förderschnecken mehrere, vorzugsweise mindestens vier, Scherabschnitte umfasst, von denen jeder mindestens zwei Scherelemente und ein Rückhalteelement verkettet.

8.  Verfahren zur Herstellung eines Polyamids gemäß einem der vorangehenden Ansprüche, **dadurch gekennzeichnet, dass** der verwendete Extruder mehrere Zonen umfasst, die in Richtung der Materialzuführung aufeinander folgen, um das gewünschte Polyamid in einem kontinuierlichen Verfahren herzustellen: eine Einführungszone ($Z_0$) des oder der Monomers/Monomere, gefolgt von einer Mischzone des oder der Monomers/Monomere ($Z_1$), gefolgt von einer Polykondensationszone ($Z_3$).

9. Verfahren zur Herstellung eines Polyamids gemäß Anspruch 8, **dadurch gekennzeichnet, dass** die Mischzone ($Z_1$) und die Polykondensationszone ($Z_3$) durch eine Isolationszone ($Z_2$) getrennt werden, um den Durchgang von Monomerdämpfen zu verhindern.

10. Verfahren zur Herstellung eines Polyamids gemäß Anspruch 9, **dadurch gekennzeichnet, dass** die Isolationszone ($Z_2$) aus mindestens einem Element zur Verengung des Materialdurchgangs oder mindestens zwei Rückhalteelementen auf jeder Förderschnecke besteht.

11. Verfahren zur Herstellung eines Polyamids gemäß einem der Ansprüche 8 bis 10, **dadurch gekennzeichnet, dass** der verwendete Extruder in der Mischzone ($Z_1$) auf jeder der ihn bildenden Förderschnecken mehrere Transportelemente umfasst, gefolgt von mindestens einem, insbesondere einem oder zwei, Scherabschnitten, die mindestens ein, vorzugsweise mindestens zwei, Scherelemente und ein Rückhalteelement verketten.

12. Verfahren zur Herstellung eines Polyamids gemäß einem der Ansprüche 8 bis 11, **dadurch gekennzeichnet, dass** der verwendete Extruder in der Polykondensationszone ($Z_3$) auf jeder der ihn bildenden Förderschnecken mindestens drei, vorzugsweise drei, vier, fünf oder sechs, Scherabschnitte umfasst, die mindestens zwei Scherelemente und ein Rückhalteelement verketten.

13. Verfahren zur Herstellung eines Polyamids gemäß Anspruch 12, **dadurch gekennzeichnet, dass** der verwendete Extruder ebenfalls in seiner Polykondensationszone ($Z_3$) auf jeder der ihn bildenden Förderschnecken mindestens einen, und insbesondere einen oder zwei, Scherabschnitte aufweist, die mindestens drei Scherelemente und ein Rückhalteelement verketten.

14. Verfahren zur Herstellung eines Polyamids gemäß Anspruch 11, 12 oder 13, **dadurch gekennzeichnet, dass** die Scherelemente in dem/den Scherabschnitt(en) Rippen aufweisen, die um einen Winkel versetzt sind, der sich entgegengesetzt zur Drehrichtung der Förderschnecken in Förderrichtung des Materials vergrößert.

15. Verfahren zur Herstellung eines Polyamids gemäß einem der vorangehenden Ansprüche, **dadurch gekennzeichnet, dass** die Operationen der Beseitigung des oder der Nebenprodukte(s), das/die durch die Polykondensationsreaktion entstanden ist/sind, von einer Re-Injektion des oder der Monomers/Monomere in den Extruder begleitet werden, das/die mit dem oder den gebildeten Nebenprodukt(en) angetrieben wird/werden.

16. Verfahren zur Herstellung eines Polyamids gemäß einem der vorangehenden Ansprüche, **dadurch gekennzeichnet, dass** die Operationen der Beseitigung des oder der gebildeten Nebenprodukte(s) von der Bildung einer Unterdruckzone innerhalb des Extruders begleitet werden.

17. Verfahren zur Herstellung eines Polyamids gemäß einem der vorangehenden Ansprüche, **dadurch gekennzeichnet, dass** den Operationen der Beseitigung des oder der gebildeten Nebenprodukte(s) eine Injektion von Inertgas in den Extruder vorausgeht.

18. Verfahren zur Herstellung eines Polyamids gemäß einem der vorangehenden Ansprüche, **dadurch gekennzeichnet, dass** der Extruder eine Kette von Elementen umfasst, die es ermöglichen, die Polykondensationsreaktion so lange durchzuführen, dass die gewünschte Umwandlungsrate am Extruderausgang erreicht wird.

19. Verfahren zur Herstellung eines Polyamids gemäß einem der vorangehenden Ansprüche, **dadurch gekennzeichnet, dass** der Extruder ausgewählt wird aus:

   - Doppelschneckenextruder mit einer Arbeitslänge von mindestens 50D, typischerweise größer oder gleich 70D, vorzugsweise größer oder gleich 90D und sehr bevorzugt größer oder gleich 120D,
   - flache 3-Schnecken-Extruder mit einer Arbeitslänge von mindestens 33D, typischerweise größer oder gleich 40D, vorzugsweise größer oder gleich 50D und sehr bevorzugt größer oder gleich 80D,
   - flache 4-Schnecken-Extruder mit einer Arbeitslänge von mindestens 24D, typischerweise größer oder gleich 30D, vorzugsweise größer oder gleich 40D und sehr bevorzugt größer oder gleich 60D,
   - flache 6-Schnecken-Extruder mit einer Arbeitslänge von mindestens 16D, typischerweise größer oder gleich 20D, vorzugsweise größer oder gleich 25D und sehr bevorzugt größer oder gleich 40D,
   - flache 8-Schnecken-Extruder mit einer Arbeitslänge von mindestens 12D, typischerweise größer oder gleich 15D, vorzugsweise größer oder gleich 20D und sehr bevorzugt größer oder gleich 30D,
   - ringförmige 4-Schnecken-Extruder mit einer Arbeitslänge von mindestens 36D, typischerweise größer oder gleich 44D, vorzugsweise größer oder gleich 56D und sehr bevorzugt größer oder gleich 88D,
- ringförmige 6-Schnecken-Extruder mit einer Arbeitslänge von mindestens 29D, typischerweise größer oder gleich 36D, vorzugsweise größer oder gleich 46D und sehr bevorzugt größer oder gleich 72D,
- ringförmige 8-Schnecken-Extruder mit einer Arbeitslänge von mindestens 24D, typischerweise größer oder gleich 28D, vorzugsweise größer oder gleich 36D und sehr bevorzugt größer oder gleich 56D,
- ringförmige 10-Schnecken-Extruder mit einer Arbeitslänge von mindestens 19D, typischerweise größer oder gleich 24D, vorzugsweise größer oder gleich 31D und sehr bevorzugt größer oder gleich 48D, und
- ringförmige 12-Schnecken-Extruder mit einer Arbeitslänge von mindestens 14D, typischerweise größer oder gleich 16D, vorzugsweise größer oder gleich 32D und sehr bevorzugt größer oder gleich 40D.

20. Verfahren zur Herstellung eines Polyamids gemäß einem der vorangehenden Ansprüche, **dadurch gekennzeichnet, dass** der Extruder ein Extruder mit mehr als zwei Förderschnecken ist.

21. Verfahren zur Herstellung eines Polyamids gemäß einem der vorangehenden Ansprüche, **dadurch gekennzeichnet, dass** der Extruder auf jeder ihn bildenden Förderschnecke mindestens 14 Transportelemente, und bevorzugt mindestens 25 Transportelemente, mindestens 18 Scherelemente, und bevorzugt mindestens 37 Scherelemente, und mindestens 6 Rückhalteelemente, und bevorzugt mindestens 15 Rückhalteelemente, aufweist.

22. Verfahren zur Herstellung eines Polyamids gemäß einem der vorangehenden Ansprüche, **dadurch gekennzeichnet, dass** die Verweilzeit des Materials im Extruder größer oder gleich 3 oder 4 Minuten, insbesondere 4 bis 30 Minuten und typischerweise 6 bis 20 Minuten beträgt.

23. Verfahren zur Herstellung eines Polyamids gemäß einem der vorangehenden Ansprüche, **dadurch gekennzeichnet, dass** das oder die in den Extruder eingeführte(n) Monomer(e) vorzugsweise einen Wassergehalt von weniger als 5 Gew.-%, noch bevorzugter weniger als 1 Gew.-%, und am meisten bevorzugt weniger als 0,6 Gew.-% enthält/enthalten.

24. Verfahren zur Herstellung eines Polyamids gemäß einem der vorangehenden Ansprüche, **dadurch gekennzeichnet, dass** ein Paar Monomere, bestehend aus einem Diamin und einer Disäure, in den Extruder eingeführt wird und mindestens zwei Operationen der Beseitigung des durch die Polykondensationsreaktion gebildeten Wassers durchgeführt werden.

25. Verfahren zur Herstellung gemäß Anspruch 24, **dadurch gekennzeichnet, dass** es einen stöchiometrischen Überschuss an dem am meisten flüchtigen Monomer verwendet, das vorzugsweise einem stöchiometrischen Verhältnis von bis zu 1,2 entspricht.

26. Verfahren zur Herstellung eines Polyamids gemäß einem der vorangehenden Ansprüche, **dadurch gekennzeichnet, dass** das oder die Monomer(e) in flüssiger geschmolzener Form in den Extruder eingebracht wird/werden.

27. Verfahren zur Herstellung eines Polyamids gemäß einem der vorangehenden Ansprüche, **dadurch gekennzeichnet, dass** es einen Katalysator verwendet, der aus den folgenden ausgewählt wird:

fünfwertiger Phosphor wie Phosphorsäure ($H_3PO_4$), Phosphorsäure ($H_3PO_3$), Hypophosphorsäure ($H_3PO_2$), Phenylphosphinsäure ($H_3PO_3Ph$), Polyphosphorsäuren wie Phosphorsäureanhydrid, Tetrapolyphosphorsäure, Pyrophosphorsäure ($H_4P_2O_7$), Trimetaphosphorsäure, Phosphorpentachlorid, Phosphorester wie Triphenyl-phosphit ($P(OPh)_3$), Hypophosphit wie Hypophosphit-Ammonium, Hypophosphit-Natrium, Borsäure und deren Derivate wie Borsäureanhydrid ($B_2O_3$), Phosphoranhydrid ($P_2O_5$) und Pyrophosphorsäure ($H_4P_2O_7$), die in der Lage ist, Wasser chemisch zu absorbieren, sind bevorzugt.

28. Extruder, der geeignet ist, ein Verfahren gemäß einem der vorangehenden Ansprüche umzusetzen.

**Claims**

1. A method for preparing a polyamide by polycondensation from one or several monomers adapted for preparing a polyamide **characterized in that**:

- the selected monomer(s) are introduced without any preliminary reaction and without any preliminary preparation of the corresponding salt, into an extruder including at least two conveying screws rotating co-rotatively,
- all the reaction and polycondensation steps, initially starting with the selected monomer(s), and giving the possibility of ending up with the desired polyamide, are conducted in a single extruder including at least two conveying screws rotating co-rotatively,
- polycondensation is achieved by carrying out at least two operations for discharging the formed by-product(s) by the polycondensation reaction,

and **in that** it includes the following successive steps:

- a step for mixing the selected monomer(s),
- a polycondensation step conducted by successively carrying out shearing and depressurization operations on the material conveyed by the conveying screws,
- a step for forming a plug of material continuously renewed by conveyance of the material on the conveying screws, between the mixing and polycondensation steps; said material plug consisting of the advancing material filling the whole space available for the passage of the material and forming an area which is hermetic to vapors, and notably to monomer vapors which may be generated.

2. The method for preparing a polyamide according to claim 1, **characterized in that** the average degree of polymerization ($PD_n$) of the obtained polyamide is at least equal to 50, preferably at least equal to 100.

3. The method for preparing a polyamide according to claim 1 or 2, **characterized in that** the obtained polyamide has a mass average molar mass (Mw) at least equal to 14,000 g/mol, and preferably belonging to the range from 30,000 to 100,000 g/mol.

4. The method for preparing a polyamide according to any of the preceding claims, **characterized in that** the obtained polyamide has a viscosity index at least equal to 80 ml/g, and preferably belonging to the range from 120 to 250 ml/g.

5. The method for preparing a polyamide according to any of the preceding claims, **characterized in that**, during the step for mixing the monomer(s), and during the step for forming the plug, the material is maintained at a temperature greater by at most 100°C than the melting temperature of the monomer having the highest melting point, and greater by more than 5°C than the melting temperature of the monomer having the highest melting point.

6. The method for preparing a polyamide according to any of the preceding claims, **characterized in that**, during the polycondensation step, the material is maintained at a temperature greater than the temperatures applied during the mixing and forming steps for the material plug, which for example belongs to the range from 150 to 350°C, and preferably from 250 to 320°C.

7. The method for preparing a polyamide according to any of the preceding claims, **characterized in that** the extruder used includes, for each conveying screw which makes it up, several, preferably at least four, shearing segments each linking at least two shearing elements and one retention element.

8. The method for preparing a polyamide according to any of the preceding claims, **characterized in that** the extruder used includes several areas in succession in the direction of conveyance of the material, in order to produce according to a continuous method, the desired polyamide: an area ($Z_0$) for introducing the monomer(s), followed by an area for mixing the monomer(s) ($Z_1$), followed by a polycondensation area ($Z_3$).

9. The method for preparing a polyamide according to claim 8, **characterized in that** mixing area ($Z_1$) and the polycondensation area ($Z_3$) are separated by an isolation area ($Z_2$), in order to avoid the passage of vapors of monomers.

10. - The method for preparing a polyamide according to claim 9, **characterized in that** the isolation area ($Z_2$) on each conveying screw consists of at least one element for shrinking the passage for the material and of at least two retention elements.

11. - The method for preparing a polyamide according to any of claims 8 to 10, **characterized in that** the extruder used includes, in the mixing area ($Z_1$), on each conveying screw which makes it up, several transport elements, followed by at least one, and notably one or two shearing segments linking at least one, preferably at least two shearing elements and one retention element.

**12.** The method for preparing a polyamide according to any of claims 8 to 11, **characterized in that** the extruder used includes, in the polycondensation area ($Z_3$), on each conveying screw which makes it up, at least three, and notably three, four, five or six shearing segments linking at least two shearing elements and one retention element.

**13.** The method for preparing a polyamide according to claim 12, **characterized in that** the extruder used includes, also in its polycondensation area ($Z_3$), on each conveying screw which makes it up, at least one, and notably one or two shearing segments linking at least three shearing elements and one retention element.

**14.** The method for preparing a polyamide according to claim 11, 12 or 13, **characterized in that** in the shearing segment(s), the shearing elements include fins shifted by an increasing angle along the direction opposite to the direction of rotation of the conveying screws, in the conveying direction of the material.

**15.** The method for preparing a polyamide according to any of the preceding claims, **characterized in that** the operations for discharging the formed by-product(s) by the polycondensation reaction are accompanied by re-injection into the extruder of the monomer(s) carried away with the formed by-product(s).

**16.** The method for preparing a polyamide according to any of the preceding claims, **characterized in that** the operations for discharging the formed by-product(s) are accompanied by the generation of a negative pressure area within the extruder.

**17.** The method for preparing a polyamide according to any of the preceding claims, **characterized in that** the operations for discharging the formed by-product(s) are preceded with an injection of inert gas into the extruder.

**18.** The method for preparing a polyamide according to any of the preceding claims, **characterized in that** the extruder includes a sequence of elements giving the possibility of conducting the polycondensation reaction for sufficient time in order to attain the desired conversion rate at the output of the extruder.

**19.** The method for preparing a polyamide according to any of the preceding claims, **characterized in that** the extruder is selected from:

- twin-screw extruders having a working length of at least 50D, typically greater than or equal to 70D, advantageously greater than or equal to 90D, and very advantageously greater than or equal to 120D,
- planar 3-screw extruders having a working length of at least 33D, typically greater than or equal to 40D, advantageously greater than or equal to 50D, and very advantageously greater than or equal to 80D,
- planar 4-screw extruders having a working length of at least 24D, typically greater than or equal to 30D, advantageously greater than or equal to 40D, and very advantageously greater than or equal to 60D,
- planar 6-screw extruders having a working length of at least 16D, typically greater than or equal to 20D, advantageously greater than or equal to 25D, and very advantageously greater than or equal to 40D,
- planar 8-screw extruders having a working length of at least 12D, typically greater than or equal to 15D, advantageously greater than or equal to 20D, and very advantageously greater than or equal to 30D,
- annular 4-screw extruders having a working length of at least 36D, typically greater than or equal to 44D, advantageously greater than or equal to 56D, and very advantageously greater than or equal to 88D,
- ' annular 6-screw extruders having a working length of at least 29D, typically greater than or equal to 36D, advantageously greater than or equal to 46D, and very advantageously greater than or equal to 72D,
- annular 8-screw extruders having a working length of at least 24D, typically greater than or equal to 28D, advantageously greater than or equal to 36D, and very advantageously greater than or equal to 56D,
- annular 10-screw extruders having a working length of at least 19D, typically greater than or equal to 24D, advantageously greater than or equal to 31D, and very advantageously greater than or equal to 48D, and
- annular 12-screw extruders having a working length of at least 14D, typically greater than or equal to 16D, advantageously greater than or equal to 32D, and very advantageously greater than or equal to 40D.

**20.** The method for preparing a polyamide according to any of the preceding claims, **characterized in that** the extruder is an extruder including more than two conveying screws.

**21.** The method for preparing a polyamide according to any of the preceding claims, **characterized in that** the extruder includes, on each conveying screw which makes it up, at least 14 transport elements, and preferably at least 25 transport elements, at least 18 shearing elements, and preferably at least 37 shearing elements, and at least 6 retention elements, and preferably at least 15 retention elements.

**22.** The method for preparing a polyamide according to any of the preceding claims, **characterized in that** the dwelling time of the material in the extruder is greater than or equal to 3 or 4 minutes, and notably from 4 to 30 minutes and typically from 6 to 20 minutes.

**23.** The method for preparing a polyamide according to any of the preceding claims, **characterized in that** the monomer(s) introduced into the extruder preferably contain a water content of less than 5% by mass, preferentially less than 1% by mass, more preferentially less than 0.6% by mass.

**24.** The method for preparing a polyamide according to any of the preceding claims, **characterized in that** a pair of monomers consisting of a diamine and of a diacid is introduced into the extruder and at least two operations for discharging the water formed by the polycondensation reaction are carried out.

**25.** The preparation method according to claim 24, **characterized in that** it uses a stoichiometric excess of the most volatile monomer, preferably corresponding to a stoichiometric ratio which may range up to 1.2.

**26.** The method for preparing a polyamide according to any of the preceding claims, **characterized in that** the monomer(s) is(are) introduced into the extruder in a liquid molten form.

**27.** The method for preparing a polyamide according to any of preceding claims, **characterized in that** it uses a catalyst selected from the following:

a pentavalent phosphorus like phosphoric acid ($H_3PO_4$), phosphorous acid ($H_3PO_3$), hypophosphorous acid ($H_3PO_2$), phenylphosphinic acid ($H_2PO_3Ph$), poly-phosphoric acids like phosphoric anhydride, tetrapolyphosphoric acid, pyrophosphoric acid ($H_4P_2O_7$), trimetaphosphoric acid, phosphoric pentachloride, a phosphorus ester such as triphenyl phosphite ($P(OPh)_3$), a hypophosphite such as ammonium hypophosphite, sodium hypophosphite, boric acid and its derivatives like boric anhydride ($B_2O_3$), phosphoric anhydride ($P_2O_5$) and pyrophosphoric acid ($H_4P_2O_7$), capable of chemically absorbing water, being preferred.

**28.** An extruder adapted for applying a method according to any of the preceding claims.

$Z_0$ : zone d'introduction des monomères
$Z_1$ : zone de mélange
$Z_2$ : zone d'isolement
$Z_3$ : zone de polycondensation
$Z_4$ : zone de transport et refroidissement

**FIG.1**

**FIG.2**

**FIG.3**

FIG.4

FIG.7

FIG.5

FIG.6

monomère 1
monomère 2
catalyseur

dépression

entrée
gaz inerte

dépression

entrée
gaz inerte

dépression

entrée
gaz inerte

$Z_1$

$Z_0$

$Z_2$

$Z_{31}$ (290°C)

$Z_{32}$
(250°C)

$Z_4$

FIG.8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0410649 A
- JP 7228693 B
- JP 4337323 B
- US 4760129 A
- DE 4329676
- WO 9314145 A
- US 3040005 A
- WO 9961509 A
- EP 0410650 A
- WO 9633234 A
- WO 2008155271 A
- GB 1289349 A

**Littérature non-brevet citée dans la description**

- Continuous Polymerization and Copolymerization of Lauryl Lactam in a Modular Corotating Twin Screw Extruder. **DE S. K. HA et al.** Intern. Polymer Processing. Hanser Publishers, 1998, vol. XIII